(19) Europäisches Patentamt European Patent Office Office européen des brevets

(11) **EP 1 900 788 A1**

(12) **EUROPEAN PATENT APPLICATION**
published in accordance with Art. 153(4) EPC

(43) Date of publication:
**19.03.2008   Bulletin 2008/12**

(21) Application number: **06767602.3**

(22) Date of filing: **29.06.2006**

(51) Int Cl.:
*C09K 3/00* (2006.01)     *B27K 5/00* (2006.01)
*C09J 161/00* (2006.01)    *C09J 191/06* (2006.01)
*A62D 3/00* (2007.01)

(86) International application number:
**PCT/JP2006/312985**

(87) International publication number:
**WO 2007/004507 (11.01.2007 Gazette 2007/02)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.07.2005   JP 2005197529**
**06.07.2005   JP 2005197538**
**06.07.2005   JP 2005197553**

(71) Applicant: **IPPOSHA OIL INDUSTRIES CO. LTD.**
**Hyogo, 675-1301 (JP)**

(72) Inventors:
• **ISHIMOTO, Kenichi,**
**Ipposha Oil Industries Co., Ltd**
**Ono-shi, Hyogo 6751301 (JP)**
• **SHIRAKAMI, Yukio,**
**Ipposha Oil Industries Co., Ltd.**
**Ono-shi, Hyogo 6751301 (JP)**

• **SHIMADA, Nobuyuki,**
**Ipposha Oil Industries Co. Ltd.**
**Ono-shi, Hyogo 6751301 (JP)**
• **MABUCHI, Tomoyuki,**
**Ipposha Oil Industries Co. Ltd.**
**Ono-shi, Hyogo 6751301 (JP)**
• **TAKEUCHI, Toshiya,**
**Ipposha Oil Industries Co. Ltd.**
**Ono-shi, Hyogo 6751301 (JP)**
• **IKEDA, Takashi,**
**Ipposha Oil Industries Co., Ltd.**
**Ono-shi, Hyogo 6751301 (JP)**

(74) Representative: **Behnisch, Werner**
**Reinhard-Skuhra-Weise & Partner GbR**
**Friedrichstrasse 31**
**80801 München (DE)**

(54) **ALDEHYDE CAPTURE MATERIAL AND PROCESS FOR PRODUCTION OF PLYWOOD WITH THE SAME**

(57)     Regarding the scavenger for aldehyde(s) used at the time of manufacturing a woody panel using woody materials and formaldehyde-based binders, the scavenger for aldehyde(s) without lowering of trapping properly even when a surface of said woody panel is sanded and having an excellent trapping property of trapping formaldehyde is provided. Further, the method of manufacturing a woody panel using a scavenger for aldehyde(s) and a woody panel are provided.

At least one kind of compound for trapping aldehyde (s) being solid at a room temperature is included and said compound for trapping aldehyde(s) is defined to be a powdery scavenger for aldehyde(s) having a property of generating acidic gas, in particular, sulfurous acid gas by heating and said compound for trapping aldehyde(s) is added to a binder or woody materials followed by a hot press, thereby manufacturing a woody panel.

【FIG.1】

## Description

### Field of the Invention

The present invention relates to a scavenger for formaldehyde which traps aldehyde(s) such as formaldehyde and the like, and more particularly, the present invention relates to a scavenger for aldehyde(s) used for inhibiting generation of aldehyde(s) from woody panels manufactured by using woody materials and formaldehyde-based binders.

### Description of the Prior Art

In manufacturing woody panels such as particle panels, plywoods, woody fiber panels and the like, sometimes formaldehyde-based binders (phenol resins, urea resins, melamine resins) and the like are used as binders. In this case, free formaldehyde derived from said formaldehyde-based binders are emitted to the atmosphere from woody panels, causing harm to environment and health.

Conventionally, as a means to solve this problem, the usual practice employs coating urea, sulfite and hydrazides on a surface of woody panels thereby preparing a so-called scavenger for formaldehyde which reacts with formaldehyde and traps it (them) (see Patent Document 1 and Patent Document 2). In this case, a scavenger for formaldehyde is usually diluted in water and the like followed by coating with a spray or a roll. After coated with the formaldehyde scavenger, woody panels are stocked in piles and delivered.

> Patent Document 1: Japanese Patent Laid-Open Publication No. Hei 11-240002
> Patent Document 2: Japanese Patent Laid-Open Publication No. 2002-331504

Meanwhile, it is usual that woody panels are delivered with surfaces slightly sanded after coated with a scavenger for aldehyde(s) in order to improve the esthetic appearance of the surfaces and to obtain required thickness. However, when the surfaces are sanded, particularly in the case where the sanding thickness is large, there are few scavengers for aldehyde(s) present on a surface of a woody panel, and as a result, a trapping property of formaldehyde lowers or is lost by the above mentioned means. As a means to solve this problem, a method of lowering the emissions of formaldehyde by adding sodium sulfite or urea as trapping components of formaldehyde in woody materials (Patent document 3) is proposed.

Patent document 3: Japanese Patent Laid-Open Publication No. Hei 10-119010

### Disclosure of the Invention

### Problem to be solved by the Invention

However, regarding the patent document 3, since sodium sulfite or urea that is a trapping component of formaldehyde is a solid, reactions with formaldehyde are solid-gas reactions.

Thus, formaldehyde is trapped on particle surfaces of said trapping components of formaldehyde. In other words, since a woody panel becomes studded with scavengers like a filter, free formaldehyde cannot be fully trapped. Particularly, considering that the JIS standard (Law on International Standardization) was revised recently, which tightens restrictions on emissions of formaldehyde, by the above means, a trapping property of aldehyde(s) is not satisfactory for preparing a woody panel under F☆☆☆☆ evaluation which is insusceptible to restriction.

Therefore, the object of the present invention is to provide a scavenger for aldehyde(s) with a trapping property not lowered by surface sanding and with an excellent trapping property of formaldehyde. Further, the object of the present invention is to provide a manufacturing method of a woody panel using the scavenger for aldehyde(s) and the woody panel.

### Means to solve the problem by the Invention

In order to solve said problem, as a result of intensive studies, the inventors have found that as a scavenger for aldehyde(s), by using a scavenger for aldehyde(s) comprising solid compounds for trapping aldehyde(s) being powdery at a room temperature and having a property of generating acidic gas, in particular, sulfurous acid gas by heating as essential components, excellent scavenging property of aldehyde(s) can be obtained.

The inventors have also found that by further adding compounds having a property of generating basic gas by heating or basic compounds to said scavenger for aldehyde(s), in addition to obtaining a scavenging property of aldehyde(s), unreacted acidic gas excessively generated can be removed.

The inventors have also found that when the compounds having a property of generating said basic gas have higher starting temperature of heat decomposition than that of said compounds for trapping aldehyde(s), the compounds having a property of generating said basic gas do not inhibit a scavenging property of aldehyde(s) of said compounds for trapping aldehyde(s).

**Effect of the Invention**

A scavenger for aldehyde(s) of the present invention could remove substantially all the free-aldehyde(s) in accordance with the emissions of aldehyde(s) such as formaldehyde from woody materials in a hot press formation process since gaseous acidic gas having a property of trapping aldehyde(s) from said scavenger for aldehyde(s) is generated. By this, good (F☆☆☆☆) evaluation could now be obtained even with a woody panel manufactured by using formaldehyde-based binders. Woodypanels of particle panels, MDF, plywoods, and the like manufactured by using this can trap aldehyde(s) with high trapping efficiency and further, the surface of woody panels has excellent esthetic appearance.

In addition, when compounds generating basic gas such as urea by heating are further added to a scavenger for aldehyde(s) of the present invention, excessively generated acidic gas can also be removed and the odor at the time of hot press is inhibited. Moreover, acidic gas and basic gas such as sulfurous acid gas and ammonia gas generated by heating produce ammonium sulfite by reacting in a gaseous state. Since the ammonium sulfite is attached to a whole woody panel, it has the effect of trapping free-aldehyde(s) generated in small quantity even after cooling a woody panel.

Further, when a compound having a property of generating said basic gas has higher temperature of thermal decomposition compared with that of said compound for trapping aldehyde(s), in the first initial stage of heating, effective trapping of aldehyde(s) comes earlier and by further raising the temperature, the chances of reactions that basic gas traps excess acidic gas increase and therefore, the competition in reactions between acidic gas and free-aldehyde(s) and reactions between acidic gas and basic gas are inhibited. In other words, in the present invention, basic gas inhibits almost no trapping property of aldehyde(s) which acidic gas has.

On the other hand, when a basic compound is added, although the drastic lowering effect of acidic gas concentration cannot be expected in the hot press formation process as seen in the compound having a property of generating said basic gas, acidic gas can be trapped in a long term which generated in a small amount even after the woody panel is manufactured.

Further, since a woody panel manufactured by the method of the present invention can also develop trapping effect to aldehyde(s) emitted again from inside of a woody panel when heated during said pasting process by a scavenger for aldehyde(s) of the present invention remaining inside of said woody panel in the case of pasting a decorative sheet on a surface of the woody panel, a woody panel pasted with a decorative sheet with preferable properties can be obtained.

Further, when a woody panel is manufactured using a scavenger for aldehyde(s) of the present invention with a water-repellent agent added, or using a set for bonding woody materials made up at least of a formaldehyde-based binders, a scavenger for aldehyde(s) including compounds for trapping aldehyde(s), and a water-repellent agent, even when a scavenger for aldehyde(s) including compounds for trapping aldehyde(s) with high hygroscopic property is used, since a water-repellent agent being powdery or granular at a room temperature is melted in the hot press formation process and has an effect of imparting a protective barrier to the whole woody materials, it can prevent manufactured woody panel from absorbing water and swelling. By this, a woody panel with good F☆☆☆☆ evaluation can be manufactured inhibiting the emissions of aldehyde(s) and further, esthetic appearance of the woody panel is excellent preventing water absorption and swelling, and cracking thereof.

**Brief explanation of the drawings**

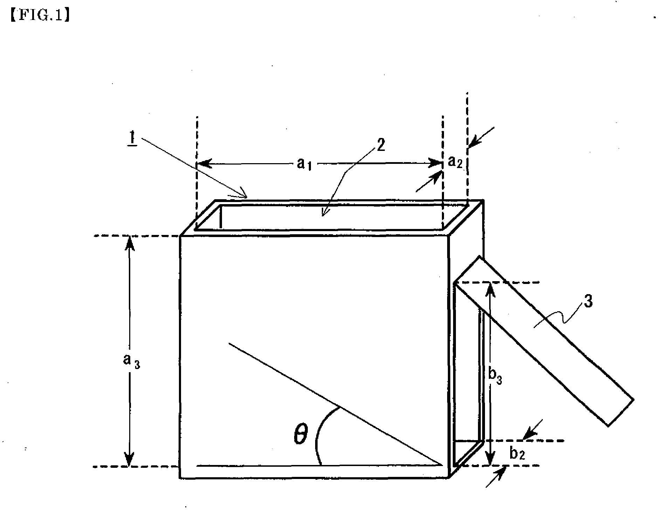

[Fig. 1] A schematic perspective view showing an apparatus measuring an angle of repose of powdery samples.

**Explanation of reference numbers**

1 A container for measuring an angle of repose
2 opening port at an upper portion
3 side lid
θ An angle of repose

**The best mode for carrying out the Invention**

(Scavenger for aldehyde(s))

The present invention relates to scavenger for aldehydes used for manufacturing a woody panel by being added to or dispersed in formaldehyde-based binders or woody materials, and its property is powdery under a room temperature. When its property is liquid, the effect that the present invention has cannot be expected and even when its property is solid, in the case where it is not a powdery but is a gathered mass whose average particle size exceeds 5 mm, it is difficult to attain even dispersion in the woody materials, and therefore, it is not appropriate. In addition, the term room temperature refers to 25 °C by strict definition although it may sometimes be used in more general meanings.

It is preferable that a scavenger for aldehyde(s) of the present invention is powdery and that not less than 70 wt % of particles contained in said powdery scavenger for aldehyde(s) has a particle size of not greater than 2 mm. In a liquid scavenger for aldehyde(s), when it is added before hot press forming of woody materials, the scavenger for aldehyde(s) gets in woody materials with no space therebetween and bonding is inhibited since the bonding point between a woody chip and a binder, and between a binder and a woody chip becomes fewer. In addition, when hot press is applied after adding liquid scavenger for aldehyde(s), vapor pressure inside of a woody panel increases and the woody panel bursts and therefore, a desired woody panel cannot be formed. Further, when a woody panel is manufactured using a powdery scavenger for aldehyde(s) in which particles with a size of not less than 2 mm are present in excess of 70 % of particles contained in the powders, traces of the particles are likely to appear on a product surface as white spots.

In order to make such particles contained in not less than 70 wt % of powders composed of particles whose particle size is not greater than 2 mm, for example, powdery scavenger for aldehyde(s) is screened by a sieve whose opening is 2mm thereby letting them composed of not less than 70 wt % of particles which passed through the sieve. In the whole powders, assessing the rate of particles whose particle size is not greater than 2mm can be made by, for example, a device for measuring particle size distribution including sonic vibration method full automatic screening measurement device "RPS-85C" (manufactured by SEISHIN ENTERPRISE CO., LTD.).

In a powdery scavenger for aldehyde(s) of the present invention, it is preferable that an angle of repose is small. An angle of repose is one index to know about the property of powders and it refers to a maximum angle formed between a slant plane and a horizontal plane in a state where piled-up powders are stably retained. An angle of repose is determined by particle shapes or resistance between particles caused by sticky particle surfaces, however, in a scavenger for aldehyde(s) of the present invention, when an angle of repose as an index is small, the powders are smooth, whereas when an angle of repose as an index is large, the powders are sticky. To be specific, in a powdery scavenger for aldehyde(s) of the present invention, an angle of repose is preferably not greater than 65° and further preferably not greater than 60°. When an angle of repose is too large, the powders are likely to get sticky as mentioned above and each of the particles is bonded and is likely to become bulky particles, which makes it difficult to handle these particles. Specific measuring methods of said angle of repose are described in Examples which are mentioned later.

(Compounds for trapping aldehyde(s))

Said scavenger for aldehyde(s) includes at least one or more compounds for trapping aldehyde(s) being solid at a room temperature, and said compounds for trapping aldehyde(s) generate acidic gas by heating.

As specific acidic gas, sulfurous acid gas and hydrogen sulfide gas can be exemplified. Compounds which generate acidic gas generate sulfurous acid gas and hydrogensulfide gas by the heating reaction as follows. Explanation goes taking sodium hydrogensulfite as a compound to generate sulfurous acid gas by heating and taking sodium hydrogensulfide as a compound to generate hydrogensulfide gas by heating.

$$2NaHSO_3 \rightarrow (heating) \rightarrow Na_2SO_3 + H_2O + SO_2 \uparrow$$

$$2NaHS \rightarrow (heating) \rightarrow Na_2S + H_2S \uparrow$$

By the above mentioned reaction, it is assumed that the mechanism of scavenging aldehyde(s) during the process of hot press by acidic gas generated from compounds for trapping aldehyde(s)follows the following chemical reaction.

(In the case of sulfurous acid gas)

$$HCHO+SO_2+H_2O \rightarrow HOCH_2SO_3H \text{ (unstable acid is formed.)}$$

$$HOCH_2SO_3H+Na_2SO_3\text{-}HOCH_2SO_3Na+NaHSO_3$$

(In the case of hydrogensulfide gas)

$$H_2S+HOCH_2OH \rightarrow HOCH_2SH+H_2O$$

Since the above mentioned reaction occurs in a gaseous state during the process of heat press formation, aldehyde(s) can effectively be removed.

As examples of compounds for trapping aldehyde(s) having a property of generating sulfurous acid gas by heating, bisulfite such as sodium hydrogensulfite is preferable. As for others, pyrosulfite, dithionite, and the like are preferable. As examples of kinds of said salts, metallic salt such as sodium salt, potassium salt, magnesium salt, and the like, amine salt such as monoethanol amine, and the like, and ammonium salt are considered. On the other hand, as examples of compounds for trapping aldehyde(s) having a property of generating hydrogen sulfide gas, hydrogensulfide and the like such as sodium hydrogen sulfide and the like can be exemplified.

Although it is necessary that a scavenger for aldehyde(s) of the present invention includes at least one compound for trapping aldehyde(s), two or more compounds for trapping aldehyde(s) can be used. Further, such compounds can be used together with other known compounds for trapping aldehyde(s). Among them, when such compounds for trapping aldehyde(s) are sodium sulfite, potassium sulfite, or hydrazides, synergistic effect is generated without canceling a scavenging property of aldehyde(s) each other and an odor-removing property is further improved.

As mentioned above, when other compounds are included, it is preferable that the content of said compounds for trapping aldehyde(s) is 5 to 95% with respect to the total amount of the scavenger for aldehyde(s).

In the case it is necessary to further strictly define the term compound having a property of generating acidic gas, it is when said acidic gas is sulfurous acid gas that can be defined strictly as follows. In other words, it refers to a compound with generation concentration of said sulfurous acid gas from said compound for trapping said aldehyde(s) of not less than 500 ppm when heated at 140°C or a compound which generates sulfurous acid gas with a starting temperature of decomposition of not greater than 250°C, and preferably, not greater than 200°C. This is because when generating concentration of sulfurous acid gas is too low, a property for trapping aldehyde(s) is not enough. This is further because when a compound has a starting temperature of decomposition which is too high, it is considered that satisfactory amount of sulfurous acid gas is not generated even at a temperature of around 200°C when bonding is conducted during the hot press forming process. On the other hand, in the case of a compound whose sulfurous acid gas concentration generated by heating exceeds 50 %, it is not preferable since the compound easily decomposes even when it is solid at a room temperature, it has strong odor and it is hard to handle.

Regarding a method for generation concentration of sulfurous acid gas at the time of heating, since there is no measurement method established for example by JIS and the like, the measurement was made under the following method explained below. Further, the measurement of a starting temperature of decomposition is conducted under the following conditions.

(Measurement of sulfurous acid gas concentration)

Testing device and instrument: Testing device for corrosion on heat transfer surface described in JIS K 2234-1994 is used. However, the portion corresponding to a metal test piece is manufactured by SUS 304 to prepare a heat plate.

Testing method: 1.0 g of a sample is put in from the upper portion of a glass cell and is sealed, followed by heating the portion corresponding to a metal test piece by a heater to a targeted temperature. After reaching the targeted temperature, the temperature is kept for 30 minutes letting sulfurous acid gas generate from the sample, followed by opening the plug of the upper portion of a testing device thereby measuring sulfurous acid gas concentration by a gas detecting tube. For information, a glass cell with an inner diameter of 40 mm and with a full length of 530 mm is used. As a gas detecting tube, a gas detecting tube type gas measuring device (sulfur dioxide) manufactured by GASTEK CORPORATION and based on JIS K0804-1998 was used.

(Starting temperature of decomposition)

Thermal decomposition was made by TG (TG/DTA6200/manufactured by SEIKO instruments Inc.) and starting temperature of decomposition was extrapolated. The heat condition is as follows.

Temperature range: 30 to 300˚C.

Temperature rise speed: 10 ˚C/min.

The result of the above test was shown in Table 1. Regarding sodium hydrogensulfite, the concentration with 0. 1 g of a sample was also measured in a supplementary manner. As shown in Table 1, sodium hydrogensulfite, sodium pyrosulfite, potassium hydrogensulfite, potassium pyrosulfite, magnesium sulfite, zinc sulfite, and aluminum sulfite were acknowledged to be compounds with sulfurous acid gas generating concentration of not less than 500 ppm when heated at a temperature of 140 ˚C or compounds which generate sulfurous acid gas and which have a starting temperature of decomposition of not greater than 250 ˚C. On the other hand, it was acknowledged that sodium sulfite and calcium sulfite do not satisfy the above requirement and are compounds which generate no acidic gas in the present invention.

(Table 1)

| Samples (Name of compounds) | Sample amount (g) | Kinds of emitted gas | Acidic gas concentration | | Starting temperature of decomposition (˚C) |
|---|---|---|---|---|---|
| | | | 25˚C | 140˚C | |
| Sodium hydrogensulfite | 1.0 | Sulfurous acid gas | 0ppm | >4% | 152˚C |
| | 0.1 | | 0ppm | 0.7% | |
| Sodiumpyrosulfite | 1.0 | Sulfurous acid gas | 0ppm | >4% | 159˚C |
| Potassium hydrogen sulfite | 1.0 | Sulfurous acid gas | - | - | 190˚C |
| Potassium pyrosulfite | 1.0 | Sulfurous acid gas | - | - | 190˚C |
| Magnesium sulfite | 1.0 | Sulfurous acid gas | 0ppm | 800ppm | >300˚C |
| Zinc sulfite | 1.0 | Sulfurous acid gas | 0ppm | 0.8% | 207˚C |
| Aluminum sulfite | 1.0 | Sulfurous | 0ppm | >4% | 103˚C |
| Sodium sulfite | 1.0 | Sulfurous acid gas | 0ppm | 0ppm | No decomposition |
| Calcium sulfite | 1.0 | Sulfurous acid gas | 0ppm | 0ppm | No decomposition |

(Compounds generating basic gas by heating)

Although said scavenger for aldehyde(s) of the present invention comprises said compounds for trapping aldehyde(s) as essential components, it is preferable that said scavenger for aldehyde(s) of the present invention further comprises a compound having a property of generating basic gas by heating. In order to trap enough amount of aldehyde (s), it is preferable to comprise said compounds for trapping aldehyde(s) so that acidic gas generates excessively to some extent by heating. However, under such a state, unreacted acidic gas remains, causing odor at the time of heat treatment, and therefore, the unreacted acidic gas is preferably removed as much as possible. Here, when a compound having a property of generating basic gas is included, unreacted acidic gas is quenched by reacting with generated basic gas.

In a scavenger for aldehyde(s) of the present invention, the ratio of a compound for trapping aldehyde(s)/a compound having a property of generating basic gas by heating is preferably 5/95 to 95/5 and more preferably, 10/90 to 90/10. When the ratio of a compound for trapping aldehyde(s) is too little, formaldehyde emitted from a woody panel cannot be fully reduced and when the ratio of a compound having a property of generating basic gas by heating is too little, acidic gas cannot be quenched.

The mechanism in which a compound having a property of generating basic gas by heating traps unreacted sulfurous acid gas, for example, is assumed to follow the following chemical reaction. Explanation goes taking urea as a compound having a property of generating basic gas by heating as an example. In this case, the generated basic gases are ammonia.

$$NH_2CONH_2 + H_2O \rightarrow (heating) \rightarrow 2NH_3 + CO_2$$

$$2NH_3 + SO_2 + H_2O \rightarrow (NH_4)_2SO_3$$

During heating, since the above mentioned gas reacts in the state of gases, unreacted sulfurous acid gas can effectively be removed.

As mentioned above, the representative examples of basic gases are ammonia. As compounds which generate ammonia by heating, ammonium sulfite, urea and its derivatives, and hydrazides can be exemplified.

As urea and its derivatives, urea and compounds having urea bond are exemplified and other than these, methyl urea, ethyl urea, dimethyl urea, diethyl urea, guanyl urea, acetyl urea, thio urea, cyclic urea condensates such as ethylene urea, allantoin, and the like, and non-cyclic urea condensates such as urea dimmer including biuret and the like.

As hydrazides, monohydrazide compound having one hydrazide group in a molecule, dihydrazide compound having two hydrazide groups in a molecule, and polyhydrazide compounds having not less than three hydrazide groups in a molecule can be exemplified. As specific examples of monohydrazide compound, alkylhydrazide compound can be exemplified such as lauryl acid hydrazide, salicylic acid hydrazide, formhydrazide, acetohydrazide, propionic acid hydrazide, naphthoic acid hydrazide, and the like. As specific examples of dihydrazide compound, dibasic acid dihydrazide compound can be exemplified such as carbodihydrazide, oxalic acid dihydrazide, malonic acid dihydrazide, succinic acid dihydrazide, adipic acid dihydrazide, azelaic acid dihydrazide, sebacic acid dihydrazide, dodecanedioic acid dihydrazide, maleic acid dihydrazide, fumaric acid dihydrazide, tartaric acid dihydrazide, malic acid dihydrazide, isophthalic acid dihydrazide, terephthalic acid dihydrazide, dimer acid dihydrazide, and the like. As specific examples of polyhydrazide compounds, polyacrylic acid hydrazide and the like can be exemplified.

Further, compounds having a property of generating basic gas by heating may be combinations of two or more compounds. As specific examples, a method of generating ammonia can be exemplified by mixing and adding solid ammonium chloride and solid aluminum hydroxide to woody materials and utilizing water vapor generated in the hot press forming process.

$$3NH_4Cl + AL(OH)_3 \rightarrow AlCl_3 + 3H_2O + NH_3\uparrow$$

When it is necessary to further strictly define the term compound having a property of generating basic gas, it refers to the compound having concentration of basic gas generated from said compound is not less than 500 ppm when heated at a temperature of 140 ˚C or the compound generating basic gas, wherein its starting temperature of decomposition is not greater than 300 ˚C. Further, starting temperature of decomposition is further preferably not greater than 250˚C. This is because when generation concentration of basic gas is too low, unreacted sulfurous acid gas cannot be fully quenched. In addition, this is because when a starting temperature of decomposition is too high, a compound is assumed not to fully generate basic gas even at a temperature of around 200 ˚C in bonding by the later mentioned heating process (hot press forming process). On the other hand, there is no specific upper limit of generation concentration of basic gas and it can be used even when it becomes 100 % at a temperature of 140˚C.

Regarding the measuring method of generation concentration of basic gas when heated, since there is no measurement method established for example by JIS and the like, it was decided to employ the method that is the same as measuring concentration of sulfurous acid gas as mentioned above. However, a gas detecting tube should be changed to an appropriate detective tube for basic gases generated such as ammonia and the like. The condition for a starting temperature of decomposition is set to be the same as when the starting temperature of decomposition of the above mentioned sulfurous acid gas is measured.

The result of the above test was shown in Table 2. As shown in Table 2, urea, carbodihydrazide, and ammonium sulfite were acknowledged to be the compound with ammonium concentration of not less than 500 ppm when heated at 140˚C. Further, while the ammonium concentration of ethylene urea, adipic acid dihydrazide, and dodecanedioic acid dihydrazide is 0 ppm, starting temperature of decomposition was acknowledged to be less than 300˚C. Further, since it was acknowledged that a starting temperature of decomposition of urea, ethylene urea, and carbodihydrazide is less than 250˚C, it was acknowledged that these can preferably be used as compounds having a property of generating basic gas by heating.

(Table 2)

| Samples (Name of compounds) | Sample amount (g) | Kinds of emitted gas | Basic gas concentration | | Starting temperature of decomposition (˚C) |
|---|---|---|---|---|---|
| | | | 25˚C | 140˚C | |
| Urea | 1.0 | Ammonia | 0ppm | 1.5% | 163˚C |
| Ethylene urea | 1.0 | Ammonia | 0ppm | 0ppm | 183˚C |
| Carbodihydrazide (CDH) | 1.0 | Ammonia | 0ppm | 0.4% | 177˚C |

(continued)

| Samples (Name of compounds) | Sample amount (g) | Kinds of emitted gas | Basic gas concentration | | Starting temperature of decomposition (˚C) |
|---|---|---|---|---|---|
| | | | 25˚C | 140˚C | |
| Adipic acid dihydrazide | 1.0 | Ammonia | 0ppm | 0ppm | 262˚C |
| Dodecanedioic acid dihydrazide | 1.0 | Ammonia | 0ppm | 0ppm | 279˚C |

Further, sulfurous acid gas concentration and ammonia gas concentration when 1 g of sodium hydrogensulfite and 1 g of urea are mixed were measured by the same method. The result is shown in Table 3.

(Table 3)

| Samples | Ammonium sulfite | | Sodium hydrogensulfite Urea | |
|---|---|---|---|---|
| Sample amount (g) | 1 g | | 1 g each (Total 2 g) | |
| Heat plate temperature | Sulfurous acid gas concentration | Ammonia gas concentration | Sulfurous acid gas concentration | Ammonia gas concentration |
| 25˚C | 0ppm | 0ppm | 0ppm | 0ppm |
| 40˚C | 0ppm | 3ppm | 25ppm | 0ppm |
| 60˚C | 0ppm | 0.1% | 400ppm | 0ppm |
| 80˚C | 0ppm | 0.4% | 0.2% | 0ppm |
| 100˚C | 0ppm 0.6% | 0.6% | 1.2% | 0ppm |
| 120˚C | 0ppm | 0.7% | 2.2% | 0ppm |
| 140˚C | 0ppm | 0.7% | 0ppm | 0.8% |
| Starting temperature of decomposition | 87˚C | | - | |

(Basic compounds)

In a scavenger for aldehyde(s) of the present invention, basic compounds can further be included. When only basic compounds are added to a scavenger for aldehyde(s) of the present invention, unlike when the compounds having a property of generating basic gas by heating, unreacted acidic gas cannot efficiently be trapped aiming at the hot press forming process, however, after forming a woody panel, a small amount of acidic gas generated for a long term from a remaining compounds for trapping aldehyde(s) can surely be trapped. Therefore, in the present invention, by adding both compounds having a property of generating basic gas by heating and basic compounds, synergistic effect of trapping acidic gas can be obtained.

Basic compounds which can be used in the present invention are not specifically limited as long as they are basic materials which react with generated acidic gas. To be specific, gaseous basic compounds such as ammonia and the like, liquid basic compounds such as alkanolamine and the like, solid basic compounds such as sodium hydroxide, calcium hydroxide, aluminum hydroxide, and the like can be exemplified. Among them, solid basic compounds are preferable from the view point of easy handling.

(Solid basic compounds)

As specific solid basic compounds, oxides or hydroxides of calcium, aluminum, zinc, or magnesium can be exemplified and further, sodium aluminate, alkylamines, and polyamine can also be used.

Among these, divalent or trivalent metal oxides such as calcium oxide, aluminum oxide, zinc oxide, magnesium oxide, calcium hydroxide, aluminum hydroxide, and the like or compounds whose basicity is relatively weak such as metal hydroxides are preferable. Strong basic compounds such as sodium hydroxide and the like are not preferable since they are likely to inhibit curing of a formaldehyde-based binder. Further, basic organic compounds which are heat-melted at the time of heating formation are not preferable either, since they are likely to cause curing inhibition by penetrating in woody materials.

(Liquid basic compounds)

As liquid basic compounds, organic alkylamine compounds such as monoethanol amine, triethanol amine, ethylene diamine, diethylene triamine, oleyl amine, and the like can be exemplified.

In a scavenger for aldehyde(s) of the present invention, the weight ratio of compounds for trapping aldehyde (s)/basic compounds is preferably 5/95 to 95/5 and more preferably, 10/90 to 90/10. When the ratio of the compounds for trapping aldehyde(s) is too small, formaldehyde emitted from a woody panel cannot be fully reduced, and when the ratio of the basic compounds is too small, acidic gas cannot be removed.

(Water-repellent agents)

Since a scavenger for aldehyde(s) with the above mentioned composition includes compounds with high water absorbability such as sodium hydrogen sulfite or sodium pyrosulfite as compounds for trapping aldehyde(s), there lies a drawback that a woody panel made of a woody material added as a compound for trapping aldehyde(s) is likely to absorb water and swell. Therefore, by further adding a water-repellent agent to a scavenger for aldehyde(s) of the above mentioned composition, it can prevent the woody panel from absorbing water and swelling.

As water-repellent agents which can be used in the present invention, known water-repellent agents which are solid at a room temperature can be used. As specific examples of preferable water-repellent agents, waxes, silicones, metal salts of higher fatty acids, and the like can be exemplified.

As waxes, natural waxes represented by carnauba wax, candelilla wax, montan wax, ceresin, paraffin wax, and microcrystalline wax, and synthetic waxes represented by polyethylene wax, polypropylene wax, $\alpha$-olefin wax, Fischer-Tropsch wax, and synthetic fatty acid ester are exemplified. In addition, oxidized waxes such as oxidized natural or synthetic waxes, hydrogenated oils and fats such as hydrogenated tallow waxes or hydrogenated castor waxes, modified wax derivatives such as modified natural or synthetic waxes, and the like are also exemplified. Further, waxes containing olefin and maleic anhydride, waxes containing olefin and acrylic acid, waxes containing vinyl acetate, or waxes such as those of higher alcohols, fatty acid amide, polyether, and the like can also be used.

As silicones, for example, modified dimethyl silicone oil is exemplified and as metal salt of higher fatty acid, for example, calcium stearate, zinc stearate, and aluminum stearate are exemplified.

Among them, water-repellent agents with a melting point of 40 to 140 ˚C are preferable, and water-repellent agents with a melting point of 50 to 120 ˚C are more preferable. The reason is that water proof effect can easily be obtained since they become solidified after they are heat-melted by hot press at the time of manufacturing a woody panel and are dispersed into whole woody materials. As preferable specific examples, natural waxes such as carnauba wax, montan wax, paraffin wax, and microcrystalline wax, synthetic waxes such as polyethylene wax, and hydrogenated oils and fats such as hydrogenated tallow wax, castor wax, and the like can be exemplified. Although these may be used alone, they may also be used in combinations.

Water-repellent agents used in the present invention are preferably powdery or granular, and a particle size is preferably not greater than 3 mm and more preferably not greater than 2 mm. The reason is that when a particle size is large, it is difficult to evenly disperse particles in woody materials and that white spots are likely to remain on a surface of a woody panel.

When said water-repellent agents are used by including them in a scavenger for aldehyde(s), the ratio is preferably 5 to 80 wt % with respect to the total amount of the scavenger for aldehyde(s) and more preferably, 10 to 60 wt %. When the ratio is too small, water absorption and swelling of a woody panel cannot be fully inhibited and on the other hand, when the ratio is too large, the scavenging property of aldehyde(s) which is the original effect of a scavenger for aldehyde(s) lowers. In order to include water-repellent agents in a scavenger for aldehyde(s), mixing them with other components such as compounds for trapping aldehyde(s) mentioned later by a known method is sufficient.

In a scavenger for aldehyde(s) of the present invention, instead of mechanically mixing said solid compounds for trapping aldehyde(s) and said solid water-repellent agents, when said water-repellent agents are mixed with said compounds for trapping aldehyde(s) and are cooled after heat-melting said water-repellent agents, a part or whole of a surface of said compounds for trapping aldehyde(s) is coated with said water-repellent agents. Said water-repellent agents coated with said compounds for trapping aldehyde(s), in addition to the effect of inhibiting water absorption and swelling in preparing the above mentioned woody panel when a scavenger for aldehyde(s) of the present invention and a formaldehyde-based binder is added to woody materials, during the time until said woody materials are provided for a hot press formation process, formaldehyde-based binder and said compounds for aldehyde(s) contact together thereby preventing degradation of said binding property. On the other hand, at the time of hot press formation, since said water-repellent agents are heat-melted and liquefied, and therefore, release compounds for trapping aldehyde(s), emissions of formaldehyde from a woody panel after hot press formation can effectively be inhibited.

(Anti-caking agents)

In a scavenger for aldehyde(s) of the present invention, for the purpose of preventing caking of said water-repellent agent particles and making an angle of repose smaller at the time of production and stocking products, in other words, for the purpose of improving product flow at the time of using products, anti-caking agents are included. As specific anti-caking agents, carbonate such as sodium carbonate, calcium carbonate, magnesium carbonate, and the like, silicate such as amorphous silica, silicate calcium, silicate magnesium and aluminosilicate such as natural zeolite, synthetic zeolite, and the like can be exemplified. Among them, white carbon, zeolite, or bentonite is preferable. The reason is that more effective anti-caking effect can be obtained. Although these compounds can be used alone as mentioned above, two or more can be used in combinations as well.

The content ratio of said anti-caking agent is preferably 0.1 to 10 wt % with respect to the total amount of the scavenger for aldehyde(s) and more preferably, 0.5 to 5 wt %. When the content ratio is too little, bonding of particles cannot effectively be prevented and water absorption and swelling of a woody panel cannot be prevented, either. On the other hand, when the content is too large, targeted effect cannot be improved and it costs high after all.

(Other additives)

In the composition of the scavenger for aldehyde(s) of the present invention, other than the above mentioned compounds, as required, additives such as anti-oxidants, preservatives, colorants, anti-rust agents, and the like can be contained.

(Manufacturing method)

Among the powdery scavenger for aldehyde(s) of the present invention, regarding the method of manufacturing the scavenger for aldehyde(s) at least comprising a compound for trapping aldehyde(s), a water-repellent agent, and an anti-caking agent, wherein said water-repellent agent includes particles which coat a part or whole of a surface of a compound for trapping aldehyde(s), by going through the processes (1) to (5), high-yield manufacturing is available.

(1) A process of heat-melting a water-repellent agent
(2) A process of dripping or spraying a heat-melted water-repellent agent in a state of higher than the melting point of said water-repellent agent by 1 to 20 ˚C, while agitating and mixing compounds for trapping aldehyde(s) after said process (1)
(3) A process of cooling a mixture obtained in said process (2) while agitating and mixing
(4) A process of further adding an anti-caking agent at the time when said mixture is cooled to a temperature which is lower than the melting point of said water-repellent agent by 10 to 50˚C in said process (3)
(5) A screening process of obtaining a powdery scavenger for aldehyde(s) by screening the mixture obtained by said process (4)

(Process (1))

In order to drip or spray a water-repellent agent to a compound for trapping aldehyde(s), process (1) of the present invention is a process for heat-melting said water-repellent agent. As for a heater used for heat-melting, a publicly known heater can be used.

(Process (2))

Although process (2) of the manufacturing method of the present invention is a process of dripping and spraying a water-repellent agent which is heat-melted in said process (1) to a compound for trapping aldehyde(s), the temperature for dripping or spraying is set to be higher than the melting point of said water-repellent agent by 1 to 20˚C. For example, a temperature for dripping or spraying using a paraffin wax whose melting point is 55 ˚C as a water-repellent agent is set to be 56 to 75˚C. Further, it is preferable to drip or spray at a temperature which is higher than the melting point of a water-repellent agent by 5 to 10˚C. When dripping or spraying temperature is too low, a water-repellent agent becomes solidified and is blocked up in a tube. On the other hand, when dripping or spraying temperature is too high, since a temperature in a granulator rises, a cooling time is prolonged, causing extra energy loss and increasing adhering to the inside surface of a granulator.

In addition, as mentioned above, in order to control a temperature at the time of dripping or spraying within a prescribed range, it is preferable to control a temperature of system parts to a spraying nozzle or a dripping port spraying or dripping melted water-repellent agents from a tank in which a water-repellent agent to be dripped or sprayed is stored.

By dripping or spraying, in particular, by spraying said water-repellent agent to compounds for trapping aldehyde (s), while controlling a temperature range at the time of dipping or spraying said water-repellent agent in the present process, a powdery scavenger for aldehyde(s) with better effect of preventing bonding inhibition with increased probability of generated composite particles in which said water-repellent agent is coated with a particle surface of compounds for trapping aldehyde(s). In order to make a scavenger for aldehyde(s) with little unbalanced components, it is preferable to drip or spray compounds for trapping aldehyde(s) which are the components to be added or sprayed while agitating.

(Process (3))

The process (3) of the manufacturing method of the present invention is the process of cooling a mixture obtained in said process (2), while agitating and mixing. By cooling, a heat-melted water-repellent agent is solidified again.

(Agitating)

As a treatment condition for agitating in said processes (2) and (3), it is preferable to agitate under the condition that agitating Froude number as defined in the following formula (i) is the Froude number Fr not less than 0.1 and less than 5.0.

$$Fr=V/[(R \times g)^{0.5}] \qquad\qquad (i)$$

In the formula (i), V represents circumferential velocity [m/s] of a tip end of a agitating blade, R represents a rotational radius [m] of the agitating blade, and g represents gravitational acceleration [m/s$^2$]. By controlling the Froude number Fr within the above range, even when a viscous water-repellent agent is selected, it can evenly be added to a compound for trapping aldehyde(s). When the Froude number Fr at the time of adding a water-repellent agent is too small, particles are bonded and bulky particles are liable to be generated. In addition, particles are adhered to the inside surface of a granulator, causing too much burden and therefore, it is not preferable. On the other hand, when the Froude number Fr is too large, or when the agitating speed is too high, since the temperature in the granulator rises caused by frictional heat by agitating, a cooling time is prolonged and energy loss is caused, and therefore it is not preferable.

(Process (4))

The process (4) of the manufacturing method of the present invention is a process of adding an anti-caking agent at the time when said mixture is cooled to the temperature lower than the melting point of said water-repellent agent by 10 to 50 ˚C insaidprocess (3). For example, whenparaffinwaxwhosemelting point is 55 ˚C is used as a water-repellent agent, an anti-caking agent is added at the time when said mixture is cooled to 5 to 45 ˚C. Further, it is more preferable to add an anti-caking agent at the time when said mixture is cooled to the temperature which is lower than the melting point of said water-repellent agent by 20 to 30˚C.

When an anti-caking agent is added before cooling by said process (3), the anti-caking agent is taken in said mixture, which does not contribute to the improvement in fluidity and an anti-caking property. Therefore, an anti-caking agent is added after the process (3) in which a water-repellent agent in said mixture is solidified. Further, by restricting the temperature range of adding an anti-caking agent to a certain range, particles with a small size can easily be obtained by one-pass.

(Process (5))

The process (5) of the manufacturing method of the present invention is the screening process in which a powdery scavenger for aldehyde(s) is obtained by screening the mixture obtained in said process (4). In the scavenger for aldehyde(s) of the present invention, since not less than 70 wt % of particles included in said powdery scavenger for aldehyde(s) preferably has a particle size of not greater than 2 mm, it is preferable to use a sieve whose opening is 2 mm, screening by other opening is naturally available and can appropriately be determined considering the targeted quality of woody panels and in particular, considering the balance of esthetic quality and production efficiency of a scavenger for aldehyde(s) of the present invention. Although it is possible to pulverize a scavenger for aldehyde(s) obtained in the process (4) before screening and further pulverize the remaining powders on a screen thereby screening again, in many cases, in a powdery scavenger for aldehyde(s) obtained through the above mentioned processes (1) to (4), even without any pulverizing process, not less than 70 wt % of particles included by one-pass can obtain particle size of not greater than 2 mm with high yield.

(Granulation methods, devices)

The above mentioned processes (1) to (4) can be conducted by agitating type granulation methods, tumbling granulation methods, extruding granulation methods, crushing granulation methods, spray-drying granulation methods and as trade names of specific devices, HIGH SPEED MIXER, HENSHEL MIXER, NEW-GRA MACHINE, SCHUGI CONTINUOUS GRANULATOR, LODIGE MIXER, PLOUGHSHARE MIXER, RIBBON SHAPED SCREW MIXER, SPARTAN GRANULATOR, CONTINUOUS "PUG MIXER", and TURBULIZER (agitating type granulation methods) can be used, and as specific devices, horizontal cylinder mixers (tumbling granulation methods), kneading extruders, horizontal continuous kneaders, sealed devices for compaction (kneading and extruding methods), counter current spray-drying column (Spray-drying granulation methods)and the like can be used.

Screening in the above mentioned process (5) can be conducted using oscillators, vibrating screenings, and the like. In addition, crushing powders can be conducted using power mills, hammer mills, pin mills, and the like.

(Manufacturing method of a woody panel 1)

Manufacturing woody panels using formaldehyde-based binders generally comprises processes of adding formaldehyde-based binders to a woody material (process of adding binders), followed by the process of binding woody materials by applying pressure and heating (hot-press forming process) . In manufacturing a woody panel using the scavenger for aldehyde(s) of the present invention, prior to said process of adding binders, the scavenger for aldehyde (s) can be used by being included in formaldehyde-based binders, and it can also be used by adding to the side of woody materials to be bonded before or after adding the binders or at the same time of adding the binders.

To cite specific manufacturing examples, for example, in manufacturing particle panels (hereinafter abbreviated as PB), woody materials crushed relatively finely are used for surface layers, while woody materials crushed relatively coarsely are used for core layers. After spray-adding a formaldehyde-based binder to woody materials for surface layers, the above mentioned scavenger for aldehyde(s) is added and is dispersed. Likewise, a binder and a scavenger for aldehyde(s) are added to woody materials for core layers. Although a scavenger for aldehyde(s) added to surface layers and a scavenger for aldehyde(s) added to core layers may be identical or different, the scavenger for aldehyde(s) used for surface layers desirably does not impair surface esthetic appearance of a woody panel. On the other hand, a scavenger for aldehyde(s) used for core layers desirably has a high scavenging property for aldehyde(s). Although the order of adding a scavenger for aldehyde(s) is not specifically restricted and the scavenger for aldehyde(s) may be added directly to a binder or may be added before, after, and at the same time with adding a binder, from the view point of the process, a scavenger is more desirably added before or after or at the same time with adding a binder in woody materials.

When unreacted acidic gas is to be trapped by compounds having a property of generating basic gas by said heating or by said basic compounds (hereinafter, both of them are called "compounds of basicity"), a scavenger for aldehydes mixed with said compounds for trapping aldehyde(s) and one or two or more of said "compounds of basicity" may be manufactured, followed by adding these to woody materials, or compounds for trapping aldehyde(s) and said "compounds of basicity" may be added to woody materials separately. In addition, said "compounds of basicity" may be added before, after, or at the same time with adding or coating of a formaldehyde-based binder. In manufacturing woody panels formed out of a plurality of layers such as particle panels, among plurality of layers, addition is available to woody materials of optionally selected one layer, or to woody materials of a plurality of layers (a part or whole). Further, said "compounds of basicity" can be put between layers. Further, compounds for trapping aldehyde(s) and said "compounds of basicity" may be used by adding to other layers or adding between layers.

After that, laminated into top surface layers-core layers-rear surface layers, the materials are heated. At the time of heating, generally, heating by applying pressure (hot pressing) is conducted. By hot pressing, woody materials are bonded and they become woody panels. In the general woody panels which do not use a scavenger for aldehyde (s) of the present invention, large amount of aldehyde(s) including free-formaldehyde in this hot press process is generated and aldehyde(s) which could not be trapped prevails in a woody panel, and therefore, evenaftercooling, aldehyde(s) is (are) generated little by little. In the woody panels which use a scavenger for aldehyde(s) of the present invention, since acidic gas is generated during said hot press forming process, such a problem does not occur. In other words, it is necessary for a scavenger for aldehyde(s) used for the manufacturing method of a woody panel in the present invention to generate enough acidic gas to trap generated aldehyde(s). Although a temperature and a time for a hot press process are appropriately determined by quality of a woody panel and productivity in general, when using a scavenger for aldehyde(s) of the present invention, in order to obtain said effect, a hot press forming temperature is preferably 100 to 300 ˚C and more preferably 140 to 250 ˚C. When the temperature is too low, the generating amount of acidic gas is little, and therefore, satisfactory amount of formaldehyde and the like cannot be trapped. On the other hand, when the temperature is too high, a quality lowers for example, a surface of a woody panel gets burned, and the like. Further, the time for hot press forming is preferably not less than 60 seconds and more preferably not less than 90 seconds. When time for forming is too short, the temperature inside of a woody panel is unlikely to rise, and the effect of this scavenger for aldehyde(s) deteriorates. The temperature inside of a woody panel at the time of hot press formation is preferably not less than 60˚C at the central portion in the thickness direction and more preferably, not less than 80˚C. Moreover, it is further preferably not less than 100˚C.

In addition, inmanufacturing amediumdensity fiber (MDF), the above mentioned scavenger for aldehyde(s) can be added and a woody panel can be manufactured likewise.

The additional content of a scavenger for aldehyde(s) to the woody materials in manufacturing a woody panel is 0.1 to 20.0 wt % and preferably 0.5 to 10 wt %, and further preferably, 1.0 to 7.0 wt %. When the additional content is less than 0.1 wt %, a targeted scavenging property cannot be obtained and when the additional content exceeds 20.0 wt %, the surface esthetic appearance of a woody panel lowers and the value as a product is impaired thereby causing the production cost to rise.

Further, when compounds for trapping aldehyde(s) and "compounds of basicity" are added separately to woody materials, the total additional content of these compounds to the woody materials is 0.1 to 20 wt %, preferably 0. 5 to 10 wt %, and further preferably, 1 to 7 wt %. When the additional content of these compounds is too little, effect of trapping aldehyde(s) and effect of reducing acidic gas cannot be obtained. On the other hand, when the additional content is too much, a surface esthetic appearance of a woody panel is also impaired and the strength lowers, thereby impairing the value as a product, thereby causing the production cost to rise. The weight ratio of compounds for trapping aldehyde(s) /"compounds of basicity" is preferably 5/95 to 95/5 and more preferably, 10/90 to 90/10. When the ratio of compounds for trapping aldehyde(s) is too little, formaldehyde emitted from the woody panel cannot be reduced enough, and when the ratio of "compounds of basicity" is too little, acidic gas cannot be removed.

To said scavenger for aldehyde(s), in addition to compounds for trapping aldehyde(s), when compounds having a property of generating basic gas by heating is selected and added as "compounds of basicity", and when said compounds having a property of generating basic gas by heating has higher starting temperature of decomposition than said compounds for trapping aldehyde(s), in the above heating process, since the reaction of acidic gas and free aldehyde (s) generated from woody materials has priority in the first initial stage of heating, effective trapping of aldehyde(s) is available.

Then, when further heating is applied, gradually, the reaction that the basic gas traps excess acidic gas becomes advantageous. Thus, since the hot press forming process can be divided into a hot press forming process in the initial stage in which acidic gas and free aldehyde(s) react and a hot press forming process in the late stage in which acidic gas and basic gas react, the competition in both reactions can be inhibited. In other words, in the method of manufacturing a woody panel in the present invention, basic gas inhibits almost no scavenging property of aldehyde(s) which acidic gas has.

In addition, according to the method of manufacturing a woody panel of the present invention, a woody panel with inhibited emissions of aldehyde(s) can be obtained, but further, compounds with a trapping property of aldehyde (s) can be coated on the woody panel obtained through the above mentioned process as an aqueous solution as well. For example, in manufacturing a particle panel (hereinafter abbreviated as PB), in a woody panel manufactured by adding compounds for trapping aldehyde(s) being solid at a room temperature to core layers, and by adding only "compounds of basicity" to surface layers, there may be the case that the effect of trapping aldehyde(s) in the surface layers of said woody panel is unsatisfactory to some degree and in such a case, it is effective to coat said aqueous solution on either surface or both surfaces of said woody panel. Compounds applicable for coating include sulfite, bisulfite, urea and its derivatives, and hydrazides. Among them, sodium hydrogensulfite, potassium hydrogensulfite, ammonium hydrogensulfite, sodium pyrosulfite, potassium pyrosulfite, sodium sulfite, potassium sulfite, ammonium sulfite, urea, ethylene urea, carbodihydrazide, and adipic acid dihydrazide are preferable. These compounds may be used alone or in combinations of two or more of them dissolved in water.

(Method of manufacturing a woody panel 2: when using water-repellent agents)

When the above mentioned scavenger for aldehyde(s) or a set for binding woody materials of the present invention is used, a woody panel with little water absorption and swelling of a woody panel, with good surface esthetic appearance, and with inhibited generating amount of aldehyde(s) can be manufactured.

As a manufacturing process, it comprises at least a process of adding a formaldehyde-based binder, a scavenger for aldehyde(s) including compounds for trapping aldehyde(s) being powdery or granular at a room temperature, and a water-repellent agent being powdery and granular at a room temperature to woody materials and a hot press forming process of preparing a woody panel by heating, applying pressure to said woody materials and binding the woody materials.

As mentioned above, when each of a formaldehyde-based binder, a scavenger for aldehyde(s), and a water-repellent agent can be dispersed in woody materials, they can be added separately to woody materials or they can be added to woody materials with two or three of them mixed beforehand. However, when a water-repellent agent is included in a scavenger for aldehyde(s) beforehand to prepare the state of the scavenger for aldehyde(s) of the present invention, it is advantageous in that it is easier to add and disperse and that the operation can be saved which must be done right before the hot press forming process.

To cite a specific example of manufacturing, when a particle panel (hereinafter abbreviated as PB) is manufactured, for example, woody materials crushed relatively finely are used for surface layers, while woody materials crushed relatively coarsely are used for core layers. After spray-adding formaldehyde-based binders in woody materials for surface layers, the above mentioned scavenger for aldehyde(s) including a water-repellent agent is added and is dispersed. Likewise, a scavenger for aldehyde(s) is added to woody materials for core layers. Although a scavenger for aldehyde(s) added to surface layers and a scavenger for aldehyde(s) added to core layers may be identical or different, the scavenger for aldehyde(s) used for surface layers desirably does not impair surface esthetic appearance of a woody panel. On the other hand, a scavenger for aldehyde(s) used for core layers desirably has a high scavenging property for aldehyde(s). Although the order of addition of a scavenger for aldehyde(s) including a water-repellent agent is not specifically restricted and the scavenger for aldehyde(s) may be added directly to a binder or may be added before, after, and at the same time with adding a binder, from the view point of the process, a scavenger for aldehyde(s) including a water-repellent agent is more desirably added before or after or at the same time with adding a binder in woody materials.

After that, laminated into top surface layers-core layers-rear surface layers, the materials are hot pressed (hot press forming process). By a hot press, woody materials are bonded and a woody panel is manufactured. Although the general heating temperature is about 200˚C, it is not specifically limited to this temperature. When said hot press forming process is conducted with no water-repellent agent present, a highly hygroscopic scavenger for aldehyde(s) acts as a water absorbing agent and a woody panel absorbs water thereby causing swelling of a woody panel, initiation of cracks, and lowering of esthetic appearance of a surface. When a scavenger for aldehyde(s) or a set of binding woody materials of the present invention is used for a woody panel, even after the hot press formation, since a water-repellent agent which is heat-melted and dispersed prevents water absorption of a woody panel, such a problem does not occur. In addition, when a medium density fiber (MDF) is manufactured, a woody panel can be manufactured by adding said scavenger for aldehyde(s) or a set of binding woody materials likewise.

The additional content of a scavenger for aldehyde(s) in manufacturing a woody panel to woody materials is 0.1 to 20.0 wt %, preferably, 0.5 to 10 wt %, and further preferably, 1.0 to 7.0 wt %. The reason is that when the additional content is less than 0.1 wt %, a targeted scavenging property cannot be obtained and on the other hand, when the additional content exceeds 20.0 wt %, esthetic appearance of a surface of a woody panel gets worse, and the value as a product is impaired thereby causing the production cost to rise.

The additional ratio of adding said water-repellent agent and a scavenger for aldehyde(s) to woody materials is preferably 5/95 to 80/20 (weight ratio) and 10/90 to 60/40 (weight ratio) is further preferable. When the ratio becomes too large, the amount of one becomes excessive and the excessive portion does not contribute to the quality improvement of a woody panel and is wasted.

(Method for manufacturing woody panels with decorative sheets pasted)

Woody panels obtained through the above process have a preferable property as woody panels with decorative sheets pasted. In many cases, woody panels with decorative sheets pasted are used for interior uses. Woody panels with decorative sheets pasted are manufactured by coating adhesives on a surface of woody panels or coating adhesives on a surface of a decorative sheet followed by adhering both. Here, decorative sheets are generally adhered by heating and pressure bonding, and at this stage, a woody panel is heated again and formaldehyde remaining in the woody panel or formaldehyde stemming from hydrolysis of a binder is generated and the emissions of formaldehyde from a woody panel increase, which has been regarded as a problem.

In this regard, in a woody panel obtained through the above process, a scavenger for aldehyde(s) of the present invention added at the time of manufacturing a woody panel remains in a woody panel, and since said scavenger for aldehyde(s) develops a scavenging property again together with heating at the time of adhering decorative sheets, emissions of aldehyde(s) can be reduced.

As kinds of decorative sheets, for example, there are paper decorative sheets, plastic decorative sheets, woody decorative sheets, and the like. In addition, although adhesives used for pasting decorative sheets are not specifically limited and formaldehyde-based binders can be used, acrylic resins, vinyl chloride resins, diallyl phthalate resins, and the like which do not contain formaldehyde are generally used as adhesives. Decorative sheets can be pasted on one surface of a woody panel or can be pasted on both surfaces. Further, adhesives may be coated on a surface of a woody panel or on a rear surface of decorative sheets, or on both surfaces on bonded surfaces.

The process temperature at the time of pasting decorative sheets is not less than 60˚C, preferably not less than 70˚C, and further preferably, not less than 80˚C. In addition, from the view point of scavenging effect of aldehyde (s), although there is no specific limitation for the upper limit temperature, in the case of pasting decorative sheets, some troubles may occur such as tarnishing of decorative sheets by heat and the like, and therefore, from this viewpoint, the upper limit temperature is preferably not greater than 160 ˚C and further preferably, not greater than 140˚C. A time for a pasting process is a time required for adhesives to get cured and it is generally 10 seconds to 20 minutes. Since the emissions of formaldehyde generated at the time of pasting these decorative sheets are less compared that generated at the time of forming a woody panel as described above, when the process temperature is as relatively as low as 60˚C, satisfactory effect of reducing the emissions of formaldehyde can be developed by a scavenger for aldehyde(s) of the present invention which remains in a woody panel.

(Example)

Hereinafter, with reference to Examples and Comparative Examples, the present invention will be described in further detail, however, the present invention is by no means restricted to the following Examples. In each Example, parts and % are on a mass basis unless otherwise noted.

(Example 1)

(Manufacturing of a woody panel)

Woody raw materials such as wood pieces and the like were crushed by a flaker, and were screened by a sieve whose opening is 1. 7 mm, thereby preparing woody materials which passed through the opening as woody materials for surface layers and woody materials which did not pass through the opening as woody materials for core layers. Woody materials for screening were dried in a hot air drier at a temperature of 90˚C, making moisture not greater than 3 %. Next, urea resin (non volatile content 65 %, urea : formaldehyde = 1 : 1.2mol) was used as a binder, with which 55 % wax emulsion, ammonium chloride as a curing agent, and water were mixed by 20 parts, 1 part, 0.5 part, and 2 parts, respectively (hereinafter called a mixture A).

With respect to 100 parts of woody materials for surface layers, 25 parts of said mixture A was added by spraying and was evenly mixed. After that, 5 parts of sodium hydrogensulfite powders as scavengers for aldehyde(s) were added thereto and mixed, thereby preparing materials for surface layers. Likewise, with respect to 100 parts of woody materials for core layers, 15 parts of said mixture A and 5 parts of sodium hydrogen sulfite powders as scavengers for aldehyde(s) were added thereto thereby preparing materials for core layers. Next, 250 parts of materials for rear surface layers, 650 parts of core layers, and 250 parts of materials for top surface layers were spread in a form of 30 cm square in series, followed by sandwiching them between a heat plates at 200˚C and hot pressing with pressure of 40 kgf/cm$^2$ for 90 seconds, thereby obtaining a woody panel with a thickness of 15.2 mm and with a density of 0.77 g/cm$^2$.

(Evaluation)

Emissions of formaldehyde of woody panels obtained by the above mentionedmethods were trapped andmeasuredby a desiccator method based on a test method for particle boards (JIS A 5908:2003) and for building boards Determination of formaldehyde emission (JIS A 1460:2001). Emissions of sulfurous acid gas from a woody panel were trapped and measured as follows. Sulfurous acid gas was trapped in the same manner as the test for formaldehyde emissions except that 100 ppm NaOH water was used as trapping water. Sulfurous acid gas becomes sodium sulfite and sodium sulfate in trapping water. For measuring concentration, an anion chromatograph manufactured by Nihon dionex K.K. was used and concentration was measured as of sulfite ion and of sulfate ion, and the meltage as sulfurous acid gas was calculated from each concentration. Odor was evaluated by olfactory evaluation of the intensity of odor stemming from a scavenger for aldehyde(s) generating at the time of hot press and the qualitywas determined.

These results are shown in Table 4. In Table 4, the signs in odor section mean as follows.

Odor: ◎ for good(no odor)　　　○ for slight odor

△ for odor　　　× for relatively strong odor　　　×× for strong odor

(Examples 2 to 13, Comparative Examples 1 to 8)

A woody panel was manufactured based on the same method as in Example 1 except that the kinds of compounds for trapping aldehyde(s) were modified from those of Example 1, thereby preparing a scavenger for aldehyde (s) and evaluation was made as in Example 1. Here, all the compounds for trapping aldehyde(s) are powdery. In addition, the same evaluation was made by changing the amount of a scavenger for aldehyde(s) to be added. The results are shown in Table 4 (Examples 2 to 13) and Table 5 (Comparative Examples 1 to 8).

[Table 4]

| | | Example 1 | Example 2 | Example 3 | Example 4 |
|---|---|---|---|---|---|
| | Sodium hydrogensulfite | Surface layers:5 parts<br>Core layer: 5 parts | | | |
| | Potassium hydrogensulfite | | Surface layers:5 parts<br>Core layer: 5 parts | | |
| | Sodium pyrosulfite | | | Surface layers:5 parts<br>Core layer: 5 parts | |
| | Potassium pyrosulfite | | | | Surface layers:5 parts<br>Core layer: 5 parts |
| | Odor at the time of hot press | × | × | × | × |
| | Sulfurous acid gas emissions | 7ppm | 5ppm | 8ppm | 7ppm |
| | Formaldehyde emissions | 0.0mg/L | 0.0mg/L | 0.0mg/L | 0.1mg/L |

| | | Example 5 | Example 6 | Example 7 | |
|---|---|---|---|---|---|
| | Zinc sulfite | Surface layers:5 parts<br>Core layer: 5 parts | | | |
| | Aluminum sulfite | | Surface layers:5 parts<br>Core layer: 5 parts | | |
| | Magnesium sulfite | | | Surface layers:5 parts<br>Core layer: 5 parts | |
| | Odor at the time of hot press | × | × | ○ | |
| | Sulfurous acid gas emissions | 2ppm | 6ppm | 1ppm | |
| | Formaldehyde emissions | 0.6mg/L | 0.3mg/L | 1.2mg/L | |

| | | Example 8 | Example 9 | Example 10 | Example 11 |
|---|---|---|---|---|---|
| | Sodium hydrogensulfite | Surface layers:20 parts<br>Core layer: 20 parts | Surface layers:10 parts<br>Core layer: 10 parts | Surface layers:7 parts<br>Core layer: 7 parts | Surface layers:1 part<br>Core layer: 1 part |
| | Odor at the time of hot press | × × | × × | × | × |
| | Sulfurous acid gas emissions | 32ppm | 19ppm | 11ppm | 3ppm |

(continued)

|  | Example 8 | Example 9 | Example 10 | Example 11 |
|---|---|---|---|---|
| Formaldehyde emissions | 0.0mg/L | 0.0mg/L | 0.0mg/L | 0.1mg/L |

|  | Example 12 | Example 13 |  |  |
|---|---|---|---|---|
| Sodium hydrogensulfite | surface layers:0.5 part<br>Core layer: 0.5 part | Surface layers:0.1 part<br>Core layer: 0.1 part |  |  |
| Odor at the time of hot press | Δ | ○ |  |  |
| Sulfurous acid gas emissions | 2ppm | 0ppm |  |  |
| Formaldehyde emissions | 0.4mg/L | 1.3mg/L |  |  |

[Table 5]

|  | Comparative Example 1 | Comparative Example 2 | Comparative Example 3 | Comparative Example 4 |
|---|---|---|---|---|
| Sodium sulfite | No use of a scavenger for aldehyde(s) | Surface layers:5 parts<br>Core layer: 5 parts |  |  |
| Ammonium sulfite |  |  | Surface layers:5 parts<br>Core layer: 5 parts |  |
| Carbozihydrazide |  |  |  | Surface layers: 5 parts<br>Core layer: 5 parts |
| Odor at the time of hot press | ◎ | ◎ | ○ | ○ |
| Sulfurous acid gas emissions | 0ppm | 0ppm | 0ppm | 0ppm |
| Formaldehyde emissions | 3.9mg/L | 1.4mg/L | 1.9mg/L | 1.3mg/L |

|  | Comparative Example 5 | Comparative Example 6 | Comparative Example 7 | Comparative Example 8 |
|---|---|---|---|---|
| Adipic acid dihydrazide | Surface layers:5 parts<br>Core layer: 5 parts |  |  |  |
| Dodecanedioic acid dihydrazide |  | Surface layers:5 parts<br>Core layer: 5 parts |  |  |
| Urea (powdery) |  |  | Surface layers:5 parts<br>Core layer: 5 parts |  |

(continued)

| | Comparative Example 5 | Comparative Example 6 | Comparative Example 7 | Comparative Example 8 |
|---|---|---|---|---|
| Sodium hydrogensulfite | | | | Surface layers:0.05 part Core layer: 0.05 part |
| Odor at the time of hot press | ◎ | ◎ | Δ | ○ |
| Sulfurous acid gas emissions | 0ppm | 0ppm | 0ppm | 0ppm |
| Formaldehyde emissions | 2.1mg/L | 2.3mg/L | 2.4mg/L | 2.5mg/L |

Next, as reference examples, the same types of experiments were conducted regarding a liquid scavenger for aldehyde(s). Manufacturing of a woody panel was attempted by the same method as in the Example 1 except that sodium hydrogensulfite powders set forth in Example 1 were changed to aqueous solutions of sodium hydrogensulfite with concentration set forth in Table 6 (Comparative Examples 9 and 10). However, under the condition of Comparative Examples 9 and 10, woody materials did not bind together and woody panels could not be manufactured.

[Table 6]

| | | Comparative Example 9 | Comparative Example 10 |
|---|---|---|---|
| Additional compounds to woody materials | | 7.5% aqueous solution of sodium hydrogensulfite | 12.5% aqueous solution of sodium hydrogensulfite |
| Additional amount | Core layer portion | 5 parts (in terms of a solid content) | 5 parts(in terms of a solid content) |
| | Surface layers portion | 5 Parts (in terms of a solid content) | 5 parts (in terms of a solid content) |
| HCHO emissions | | Formation nonavailable | Formation nonavailable |

(Examples 14 to 23)

Next, the results of a scavenger for aldehyde(s) which includes both a compound generating sulfurous acid gas by heating and a compound generating basic gas by heating are shown in Table 7 (Examples 14 to 23). Here, a scavenger for aldehyde(s) to be used was evenly mixed beforehand, followed by manufacturing a woody panel by the same method as in Example 1.

[Table 7]

| Item | Example 14 | Example 15 | Example 16 | Example 17 |
|---|---|---|---|---|
| Sodium hydrogensulfite | 50 | 50 | 50 | 50 |
| Ammonium sulfite | 50 | | | |
| Urea | | 50 | | |
| Ethylene urea | | | 50 | |
| Carbodihydrazide | | | | 50 |
| Additional amount | Surface layers : 5 parts Core layer: 5 parts | Surface layers : 5 parts Core layer: 5 parts | Surface layers : 5 parts Core layer: 5 parts | Surface layers : 5 parts Core layer: 5 parts |

(continued)

| Item | Example 14 | Example 15 | Example 16 | Example 17 |
|---|---|---|---|---|
| Odor at the time of hot press | Δ | ○ | Δ | ○ |
| Formaldehyde emissions | 0.3mg/L | 0.0mg/L | 0.0mg/L | 0.0mg/L |
| Sulfurous acid gas emissions | 1ppm | 1ppm | 3ppm | 1ppm |

| Item | Example 18 | Example 19 | Example 20 | Example 21 |
|---|---|---|---|---|
| Sodium hydrogensulfite | | 95 | 80 | 20 |
| sodium pyrosulfite | 50 | | | |
| Urea | 50 | 5 | 20 | 80 |
| Additional amount | Surface layers : 5 parts Core layer: 5 parts | Surface layers : 5 parts Core layer: 5 parts | Surface layers : 5 parts Core layer: 5 parts | Surface layers : 5 parts Core layer: 5 parts |
| Odor at the time of hot press | ○ | Δ | ○ | ○ |
| Formaldehyde emissions | 0.0mg/L | 0.0mg/L | 0.0mg/L | 0.1mg/L |
| Sulfurous acid gas emissions | 1ppm | 3ppm | 1ppm | 0ppm |

| Item | Example 22 | Example 23 | | |
|---|---|---|---|---|
| Sodium hydrogensulfite | 10 | 5 | | |
| Urea | 90 | 95 | | |
| Additional amount | Surface layers : 5 parts Core layer: 5 parts | Surface layers : 5 parts Core layer: 5 parts | | |
| Odor at the time of hot press | ○ | Δ | | |
| Formaldehyde emissions | 0.3mg/L | 0.6mg/L | | |
| Sulfurous acid gas emissions | 0ppm | 0ppm | | |

(Examples 24 to 29, Comparative Examples 11 to 14)

Next, the result of adding bisulfite as a compound having a property of generating acidic gas (sulfurous acid gas) by heating and sodium sulfite, potassium sulfite, or hydrazide compounds as publicly known compounds with a property of trapping aldehyde(s) to a scavenger for aldehyde(s) is shown in Table 8 (Examples 24 to 29) and the Comparative Examples (Comparative Examples 11 to 14) using two or more publicly known compounds with a property of trapping aldehyde(s) in a mixture instead of using compounds generating acidic gas by heating are shown in Table 9. Here, a scavenger for aldehyde(s) to be used was evenly mixed beforehand, followed by manufacturing a woody panel by the same method as in Example 1.

[Table 8]

| Item | Example 24 | Example 25 | Example 26 | Example 27 |
|---|---|---|---|---|
| Sodium hydrogensulfite | 50 | 50 | 50 | 50 |
| Sodium sulfite | 50 | | | |
| Potassium sulfite | | 50 | | |
| Adipic acid dihydrazide | | | 50 | |
| Dodecanedioic acid dihydrazide | | | | 50 |
| Additional amount | Surface layers : 5 parts Core layer: 5 parts | Surface layers : 5 parts Core layer: 5 parts | Surface layers : 5 parts Core layer: 5 parts | Surface layers : 5 parts Core layer: 5 parts |
| Odor at the time of hot press | Δ | Δ | Δ | Δ |
| Formaldehyde emissions | 0.0mg/L | 0.0mg/L | 0.0mg/L | 0.0mg/L |
| Sulfurous acid gas emissions | 6ppm | 5ppm | 4ppm | 5ppm |

| Item | Example 28 | Example 29 | | |
|---|---|---|---|---|
| Sodium hydrogensulfite | 20 | 20 | | |
| Sodium sulfite | 40 | | | |
| Urea | 40 | 40 | | |
| Adipic acid dihydrazide | | 40 | | |
| Additional amount | Surface layers : 5 parts Core layer: 5 parts | Surface layers : 5 parts Core layer: 5 parts | | |
| Odor at the time of hot press | ○ | ○ | | |
| Formaldehyde emissions | 0.1mg/L | 0.0mg/L | | |
| Sulfurous acid gas emissions | 0ppm | 0ppm | | |

[Table 9]

| | Comparative Example 11 | Comparative Example 12 | Comparative Example 13 | Comparative Example 14 |
|---|---|---|---|---|
| Sodium sulfite | 50 | 10 | 50 | 10 |
| Urea (powdery) | 50 | 90 | | |
| Adipic acid dihydrazide | | | 50 | 90 |

(continued)

| | Comparative Example 11 | Comparative Example 12 | Comparative Example 13 | Comparative Example 14 |
|---|---|---|---|---|
| Additional amount | Surface layers : 5 parts Core layer: 5 parts | Surface layers : 5 parts Core layer: 5 parts | Surface layers : 5 parts Core layer: 5 parts | Surface layers : 5 parts Core layer: 5 parts |
| Odor at the time of hot press | × | Δ | ◎ | ◎ |
| Sulfurous acid gas emissions | 0ppm | 0ppm | 0ppm | 0ppm |
| Formaldehyde emissions | 1.3mg/L | 1.5mg/L | 1.4mg/L | 1.7mg/L |

(Example 30)

Next, a woody panel was manufactured in the same method as in Example 1, except that a compound for trapping aldehyde(s) was modified to be a compound for trapping aldehyde(s) which is sodium hydrogensulfide generating hydrogensulfide gas by heating and the same evaluation was made as in Example 1. The result is shown in Table 10.

[Table 10]

| | Example 30 |
|---|---|
| Sodium hydrogensulfide | Surface layers : 3 parts Core layer: 5 parts |
| Kind of gas emitted | Hydrogen sulfide gas |
| Odor at the time of hot press | - |
| Hydrogen sulfide gas emissions | - |
| Formaldehyde emissions | 0.9mg/L |

(Examples 31 to 33)

Next, a woody panel was manufactured by the same method as in Example 14 and was evaluated in the same manner as in Example 14 except that instead of ammonium sulfite which is a compound generating basic gas by heating, solid basic compounds (aluminum hydroxide, calcium hydroxide, and calcium oxide) were used and that the composition ratio of the solid basic compounds to sodium hydrogensulfite was changed to 70/30. The results are shown in Table 11.

[Table 11]

| Item | Example 31 | Example 32 | Example 33 | |
|---|---|---|---|---|
| Sodium hydrogensulfite | 70 | 70 | 7 0 | |
| Aluminum hydroxide | 30 | | | |
| Calcium hydroxide | | 3 0 | | |
| Calcium oxide | | | 3 0 | |
| Additional amount | Surface layers : 5 parts Core layer: 3 parts | Surface layers : 5 parts Core layer: 3 parts | Surface layers : 5 parts Core layer: 3 parts | |
| Odor at the time of hot press | - | - | - | |
| Formaldehyde emissions | 0.2mg/L | 0.3mg/L | 0.4mg/L | |
| Sulfurous acid gas emissions | 4ppm | 5ppm | 4ppm | |

(Examples 34 to 37, Comparative Examples 15 to 16)

A woody panel manufactured by adding a powdery scavenger for aldehyde(s) of the present invention only to core layers of woodymaterials, formed by the same hot press formation process as in Example 1, followed by coating compounds with a property of trapping aldehyde(s) on both surfaces of a woody panel as an aqueous solution and drying at a room temperature was evaluated. The result is shown in Table 12. In addition, as comparison, the evaluation was also made on a woody panel manufactured by the same process but using sodium sulfite, i.e., compounds which do not generate sulfurous acid gas by heating as a powdery scavenger for aldehyde(s) to core layer. The result is shown in Table 13.

[Table 12]

|  | Example 34 | Example 35 | Example 36 | Example 37 |
|---|---|---|---|---|
| (Powdery) sodium pyrosulfite | Surface layers : None Core layer: 3 parts | Surface layers : None Core layer: 3 parts | Surface layers : None Core layer: 3 parts | Surface layers: None Core layer: 3 parts |
| Aqueous solution of a scavenger for aldehyde(s) | Sodium sulfite aqueous solution (Concentration 10%) | Adipic acid dihydrazide aqueous solution (Concentration 10%) | Urea aqueous solution (Concentration 10%) | carbodihydrazide aqueous solution (Concentration 10%) |
| Coated amount | 100g/m$^2$ | 100g/m$^2$ | 100g/m$^2$ | 100g/m$^2$ |
| Odor at the time of hot press | - | - | - | - |
| Sulfurous acid gas emissions | - | - | - | - |
| Formaldehyde emissions | 0.1mg/L | 0.2mg/L | 0.4mg/L | 0.0mg/L |

[Table 13]

|  | Comparative Example 15 | Comparative Example 16 |
|---|---|---|
| (Powdery) sodium sulfite | Surface layers : None Core layer: 3 parts | Surface layers : None Core layer: 3 parts |
| Aqueous solution of a scavenger for aldehyde(s) | Sodium sulfite aqueous solution (Concentration 10%) | Urea aqueous solution (Concentration 10%) |
| Coated amount | 100g/m$^2$ | 100g/m$^2$ |
| Odor at the time of hot press | - | - |
| Sulfurous acid gas emissions | - | - |
| Formaldehyde emissions | 1.3mg/L | 2.1mg/L |

(Example 38)

On one surface of a woody panel manufactured in Example 1, commercially available bond for woodwork (manufactured by Konishi Co., Ltd., non-formaldehyde type) was coated by 200 g /m$^2$ followed by pasting a plastic decorative sheet thereby hot pressing at a temperature of 60 ˚C for 5 minutes. Emissions of formaldehyde of this woody panel with a decorative sheet pasted were measured.

(Examples 39 to 43, Comparative Examples 17 to 18)

A woody panel with a decorative sheet pasted was manufactured by the same method as in Example 38 except that a woody panel to be used and the temperature of pasting process were changed, and was evaluated in the same manner as in the Example 38. These results are shown in Table 14 (Examples 39 to 43) and Table 15 (Comparative Examples 17 to 18).

【Table 14】

|  | Example 38 | Example 39 | Example 40 | Example 41 |
|---|---|---|---|---|
| A woody panel used | Example 1 | Example 1 | Example 1 | Example 1 |
| Process temperature of pasting decorative sheets | 6 0℃ | 9 0℃ | 1 2 0℃ | 1 6 0℃ |
| Formaldehyde emissions | 0.1mg/L | 0.0mg/L | 0.0mg/L | 0.2mg/L |
|  | Example 42 | Example 43 |  |  |
| A woody panel used | Example 31 | Example 34 |  |  |
| Process temperature of pasting decorative sheets | 9 0℃ | 9 0℃ |  |  |
| Formaldehyde emissions | 0.2mg/L | 0.3mg/L |  |  |

[Table 15]

|  | Comparative Example 17 | Comparative Example 18 |
|---|---|---|
| A woody panel used | Comparative Example 15 | Comparative Example 16 |
| Process temperature of pasting decorative sheets | 90˚C | 9 0˚C |
| Formaldehyde emissions | 1.5mg/L | 2.6mg/L |

From the results of the above Tables 4 to 15, it is found that a scavenger for aldehyde(s) using compounds for trapping aldehyde(s) having a property of generating acidic gas (sulfurous acid gas, hydrogensulfide gas) by heating can greatly improve scavenging property of formaldehyde generated from a particle panel compared with using already known scavengers. Further, when "compounds of basicity" are included therein, it is found that the scavenger can reduce remaining acidic gas and that odor at the time of hot press formation can also be reduced.

In addition, by combining compounds of sodium sulfite, potassium sulfite, and hydrazides, it is found that the odor at the time of manufacturing can be improved. Further, it is found that in a scavenger for aldehyde(s) of the present invention, compositions of surface layers and core layers can be changed and used in combinations. Moreover, it is found that a woody panel obtained by the manufacturing method of the present invention develops a high scavenging property for aldehyde(s) emitted during the process of pasting decorative sheet together.

(Examples 44 to 48: Evaluation on water absorption thickness expansion coefficient)

(Example 44)

(Manufacturing of woody panels)

Woody raw materials such as wood pieces and the like were crushed by a flaker, and were screened by a sieve whose opening is 1. 7 mm, thereby preparing woody materials which passed through the opening as woody materials for surface layers and woody materials which did not pass through the opening as woody materials for core layers. Woody materials for screening were dried in a hot air drier at a temperature of 90˚C, making moisture not greater than 3 %. Next, urea resin (non volatile content 65 %, urea : formaldehyde = 1 : 1.2mol) was used as a binder, with which 55 % wax emulsion, ammonium chloride as a curing agent, and water were mixed by 20 parts, 1 part, 0.5 part, and 2 parts, respectively (hereinafter called a mixture A).

With respect to 100 parts of woody materials for surface layers, 25 parts of said mixture A was added by spraying and was evenly mixed. After that, 5 parts of powdery scavenger for aldehyde(s) including sodium hydrogensulfite (compounds for trapping aldehyde(s))and paraffin waxes (water-repellent agents) mixed by the ratio shown in Table 16 was added thereto, thereby preparing materials for surface layers. Likewise, with respect to 100 parts of woody materials for a core layer, 15 parts of said mixture A and 5 parts of said scavenger for aldehyde(s) were added thereto thereby preparing materials for a core layer. Next, 250 parts of materials for a rear surface layer, 650 parts of a core layer, and 250 parts of materials for a top surface layer were spread in a form of 30 cm square in series, followed by sandwiching them between heat plate at 200˚C and hot pressing with pressure of 40 kgf/cm$^2$ for 90 seconds, thereby obtaining a woody panel with a thickness of 15.2 mm and with a density of 0.77 g/cm$^2$.

Here, paraffin waxes (melting point 55˚C) were crushed beforehand and those screened by a sieve with an opening of 2 mm were used.

(Evaluation)

In addition to evaluating on items which are the same as in Example 1, water absorption thickness expansion coefficient was measured.

Emissions of formaldehyde and water absorption thickness expansion coefficient were measured based on a test method for particle boards (JIS A 5908:2003) and for building boards Determination of formaldehyde emission (JIS A 1460:2001).

(Examples 45 to 48)

A woody panel was manufactured by the same method as in Example 44 except that the kinds of compounds for trapping aldehyde(s) or water-repellent agents have been changed thereby preparing a scavenger for aldehyde(s) and the same evaluation as in Example 44 was conducted.

(Example 49)

As an Example with no water-repellent agent added, water absorption thickness expansion coefficient was measured on a woody panel manufactured in Example 1. The results of Examples 44 to 49 as heretofore mentioned are shown in Table 16.

【Table 16】

| Item | Example 44 | Example 45 | Example 46 |
|---|---|---|---|
| Scavenger for aldehyde(s) | Sodium hydrogensulfite : 80 parts<br>Paraffin wax: 20 parts<br>Wax melting point:55℃ | Sodium pyrosulfite: 80 parts<br>Paraffin wax: 20 parts<br>Wax melting point:55℃ | Potassium hydrogensulfite : 80parts<br>Paraffin wax: 20 parts<br>Wax melting point:55℃ |
| Additional amount | Surface layers: 5 parts<br>Core layer: 5 parts | Surface layers: 5 parts<br>Core layer: 5 parts | Surface layers: 5 parts<br>Core layer: 5 parts |
| Particle size | Not greater than 2mm | Not greater than 2mm | Not greater than 2mm |
| Formaldehyde emissions | 0.0mg/L | 0.1mg/L | 0.1mg/L |
| Water absorption thickness expansion coefficient | 5% | 6% | 6% |

| Item | Example 47 | Example 48 | Example 49 |
|---|---|---|---|
| Scavenger for aldehyde(s) | Sodium hydrogensulfite:80 parts<br>Hydrogenated tallow wax : 20 parts<br>Wax melting point:59℃ | Sodium hydrogensulfite : 80 parts<br>Polyethylene wax:20parts<br>Wax melting point : 122℃ | Sodium hydrogensulfite : 100 parts |
| Additional amount | Surface layers: 5 parts<br>Core layer: 5 parts | Surface layers: 5 parts<br>Core layer: 5 parts | Surface layers: 5 parts<br>Core layer: 5 parts |
| Particle size | Not greater than 2 mm | Not greater than 2 mm | Not greater than 2 mm |
| Formaldehyde emission | 0.1mg/L | 0.0mg/L | 0.0mg/L |
| Water absorption thickness expansion coefficient | 6% | 11% | 24% |

(Examples 50 to 57: Evaluation on angles of repose)

(Example 50)

79 parts of powdery sodium pyrosulfite (manufactured by DAITO CHEMICAL CO., LTD., average particle size 173μm) was put in a trade name HIGH SPEED MIXER (manufactured by FUKAE POWTEC CO., LTD) and 20 parts of PARVAN 1320 which is a paraffin wax with a melting point of 55˚C (manufactured by Exon Mobil Co., Ltd) was heat-melted, followed by spraying to said sodium pyrosulfite in a state of 65˚C, thereby granulating under the granulation condition with an agitating Froude number Fr of 1.1. At this time, the temperature of powders rose to 48˚C. Next, said powders were cooled to 40˚C, while maintaining the condition with an agitating Froude number Fr of 1.1, followed by obtaining a scavenger for aldehyde(s) and having confirmed that the temperature of obtained samples reached a cooling temperature (40˚C), 1 part of CARPREX®#67 (manufactured by DLS JAPAN) which is silica was added. Finally, in a powermill (manufactured by DALTON CO., LTD), maximum particle size was set to be 3 mm, returning particles with a particle size of exceeding 3 mm to the granulator, followed by crushing and screening, thereby obtaining a scavenger for aldehyde(s) of the Example 50.

(Examples 51 to 57)

A scavenger for aldehyde(s) of the Examples 51 to 57 was obtained by the same procedure as in Example 50 except that the kinds of raw materials and compounding ratio were changed to those described in Table 17.

(Evaluation: Measurement of angles of repose)

Angles of repose were measured on Examples 50 to 57 which were obtained. For measurement, a rectangular container 1 as shown in Fig. 1 was used with an opening port 2 at the upper portion, a side lid 3 at the short side. In addition, the width of an opening port 2 is 10 cm (longitudinal: $a_1$) by 3 cm (horizontal: $a_2$), and the height $a_3$ is 10 cm, and a side lid 3 can be opened from the base portion and its size is 3 cm (horizontal: $b_2$) by 8 cm (height: $b_3$) . First,

about 280 cm$^3$ of powdery samples was carefully put from said opening port 2 of the upper portion of a container with said side lid 3 closed. Next, a side lid 3 was carefully opened with a container 1 horizontally maintained, and after powdery samples flew off, the angle of a powder surface at the time when saidpowdery samples stopped flowing was measured and said angle θ was defined as an angle of repose of the samples.

Regarding a scavenger for aldehyde(s) in Examples 50 to 57, compounding condition of raw materials and manufacturing condition were changed, and obtained powder properties were organized in Table 17.

[Table 17]

| | | Example 50 | Example 51 | Example 52 | Example 53 | Example 54 | Example 55 | Example 56 | Example 57 |
|---|---|---|---|---|---|---|---|---|---|
| Compounds for trapping aldehydes(s) | Powdery sodium pyrosulfite | 79 | 49 | 79 | 79 | 79 | 79 | 75 | 70 |
| | Powdery urea ※1) | | 30 | | | | | | |
| Water-repellent agent | Paraffin wax (melting point 55°C) ※2) | 20 | 20 | 20 | | | 20 | 20 | 20 |
| | Hydrogenated tallow wax (melting point 59°C) | | | | 20 | | | | |
| | Polyethylene (melting point 120°C)※3) | | | | | 20 | | | |
| Anti-caking agent | Silica※4) | 1 | 1 | | 1 | 1 | 1 | | |
| | Zeolite※5) | | | 1 | | | | 5 | 10 |
| Dripping and spraying temperature of water-repellent agent | | 65 | 65 | 65 | 69 | 135 | 75 | 60 | 60 |
| Agitating Froude No.(Fr) | | 1.1 | 1.1 | 1.1 | 1.1 | 1.1 | 1.1 | 1.1 | 1.1 |
| Cooling temperature (°C) | | 40 | 40 | 40 | 44 | 90 | 35 | 40 | 40 |
| Angle of repose(°) | | 60 | 60 | 65 | 60 | 55 | 55 | 65 | 60 |
| Particle size distribution | 3-2mm | 0.9% | 3.1% | 0.3% | 0.6% | 0.5% | 0.7% | 1.1% | 0.8% |
| Particle size distribution | 2-1mm | 4.2% | 15.5% | 12.2% | 0.5% | 3.6% | 3.9% | 8.5% | 7.5% |
| Particle size distribution | 1-0.5mm | 9.6% | 19.5% | 28.2% | 4.0% | 7.3% | 9.2% | 21.6% | 18.7% |
| Particle size distribution | Not greater than 0.5mm | 85.3% | 61.9% | 59.3% | 94.9% | 88.6% | 86.2% | 68.8% | 73.0 % |

※1) Powdery urea; industrial urea (powdery: average particle diameter 264 μm manufactured by Mitsui Chemicals Inc.)

※2) Paraffin wax; PARVAN 1320 (manufactured by Exon Mobil Co., Ltd)

※3) Polyethyelne; HI-WAX 410P (manufactured by Mitsui Chemicals Inc.)

※4) Silica; CARPREX®#67 (manufactured by DLS JAPAN)

※5) zeolite; Toyobuilder® (manufactured by TOSOH CORPORATION)

(Examples 58 to 62: evaluation on appearance of woody panels)

Woody raw materials such as wood pieces and the like were crushed by a flaker, and were screened by a sieve whose opening is 1. 7 mm, thereby preparing woody materials which passed through the opening as woody materials for surface layers and woody materials which did not pass through the opening as woody materials for core layers. Woody materials for screening were dried in a hot air drier at a temperature of 90°C, making moisture not greater than 3 %. Next, urea resin (non volatile content 65 %, urea : formaldehyde = 1 : 1.2mol) was used as a binder, with which 55 % wax emulsion, ammonium chloride as a curing agent, and water were mixed by 20 parts, 0.5 part, 0.5 part, and 2 parts, respectively (hereinafter called a mixture A).

On the other hand, a scavenger for aldehyde(s) manufactured in Example 50 were screened by each of particle sizes by sieves with an opening of 3 mm, 2 mm, 1 mm, and 0.5 mm respectively, thereby preparing a scavenger for aldehyde(s) of Examples 58 to 62. Correspondence of the number of Examples and screened powders is shown in Table 18.

25 parts of said mixture A was added by spraying to 100 parts of woody materials for surface layers and was evenly mixed. Then, 5 parts of said screened scavenger for aldehyde(s) was further added and mixed, thereby preparing materials for surface layers.

Likewise, 15 parts of mixture A and 3 parts of scavengers for aldehyde(s) manufactured by Example 50 were added to 100 parts of woody materials thereby preparing materials for a core layer. Next, 250 parts of materials for a rear surface layer, 650 parts of a core layer, and 250 parts of materials for a top surface layer were spread in a form of 30 cm square in series, followed by sandwiching them between heat plates at 200°C and hot pressing with pressure of 40 kgf/cm$^2$ for 90 seconds, thereby obtaining a woody panel with a thickness of 15.2 mm and with a density of 0.77 g/cm$^2$.

Regarding a woody panel prepared by the above, flexural strength, separation strength, water absorption thickness expansion coefficient, emissions of formaldehyde, and appearance thereof were tested. Emissions of formaldehyde, flexural strength, separation strength, and water absorption and swelling were measured based on a test method for particle boards (JIS A 5908:2003) and for building boards Determination of formaldehyde emission (JIS A 1460: 2001). In addition, regarding the appearance test, a surface of a woody panel obtained after hot press formation was visually observed and evaluation was made by checking the presence of white spots, sizes, amounts, and the like. Evaluation criteria are as follows.

◎: good (no white spots discovered)

○: few fine white spots discovered

Δ: many fine white spots or few larger white spots discovered

✕: many large white spots

The test of the above woody panel and the result are shown in Table 18.

[Table 18]

| Example No. | | 58 | 59 | 60 | 61 | 62 |
|---|---|---|---|---|---|---|
| Particle size | | 2~1mm | 1~0.5mm | Not greater than 0.5mm | Not less than 2mm: 30% Not greater than 2 mm : 70% | Not less than 2mm: 10% Not greater than 2mm : 90% |
| Additional amount | Core layer portion | 3 parts | 3 parts | 3 parts | 3 parts | 3 parts |
| | Surface layers portion | 5 parts | 5 parts | 5 parts | 5 parts | 5 parts |
| Appearance of a woody panel | | ○ | ◎-○ | ◎ | Δ | ○-Δ |
| Flexural strength (N/mm$^2$) | | 19.8 | 19.4 | 20.6 | 20.5 | 19.6 |
| Separation strength (N/mm$^2$) | | 0.6 | 0.7 | 0.6 | 0.6 | 0.7 |
| Water absorption thickness expansion coefficient [%] | | 6 | 6 | 6 | 6 | 7 |
| Formaldehyde emission [mg/L] | | 0.1 | 0.2 | 0.1 | 0.1 | 0.2 |

**Industrial applicability**

A scavenger for aldehyde(s) of the present invention has industrial applicability as additives to be added to woody materials or binders in binding woody materials with formaldehyde-based binders. In addition, the method of manufacturing a woody panel of the present invention has industrial applicability as the method of manufacturing particle panels, plywoods, and woody fiber panels with little emissions of formaldehyde.

**Claims**

1. A scavenger for aldehyde(s) used by being added to or dispersed in woody materials or binders, wherein said scavenger for aldehyde(s) is powdery at a room temperature, said scavenger for aldehyde(s) includes at least one or more compounds for trapping aldehyde(s) being solid at a room temperature, and said compounds for trapping aldehyde(s) generate acidic gas by heating.

2. The scavenger for aldehyde(s) as set forth in claim 1, wherein among the compounds for trapping aldehyde(s), the acidic gas generated by heating is sulfurous acid gas.

3. The scavenger for aldehyde(s) as set forth in claim 1, wherein the acidic gas generated from said compounds for trapping aldehyde(s) is sulfurous acid gas and generation concentration of said sulfurous acid gas is not less than 500ppm when heated at a temperature of 140°C.

4. The scavenger for aldehyde(s) as set forth in claim 1, wherein the acidic gas generated from said compounds for trapping aldehyde(s) is sulfurous acid gas and starting temperature of decomposition of said compounds for trapping aldehyde(s) is not greater than 250°C.

5. The scavenger for aldehyde(s) as set forth in claim 1, wherein said compounds for trapping aldehyde(s) are compounds which are any one of bisulfite, pyrosulfite, and dithionite.

6. The scavenger for aldehyde(s) as set forth in claim 1, wherein said compounds for trapping aldehyde(s) are any one of sodium hydrogensulfite, potassium hydrogensulfite, sodium pyrosulfite, potassium pyrosulfite, magnesium sulfite, zinc sulfite, or aluminum sulfite.

7. The scavenger for aldehyde(s) as set forth in claim 1, wherein said compounds for trapping aldehyde(s) are contained in 5 to 95 wt % with respect to the total amount of the scavenger for aldehyde(s).

8. A scavenger for aldehyde(s) used by being added to or dispersed in woody materials or binders, wherein said scavenger for aldehyde(s) is powdery at a room temperature and said scavenger for aldehyde(s) comprises compounds for trapping aldehyde(s) being solid at a room temperature generating acidic gas by heating and compounds having a property of generating basic gas by heating.

9. The scavenger for aldehyde(s) as set forth in claim 8, wherein among the compounds having a property of generating said basic gas, generated basic gas is ammonia gas.

10. The scavenger for aldehyde(s) as set forth in claim 8, wherein basic gas generated from the compounds having a property of generating said basic gas is ammonia gas, and the generating concentration of said ammonia gas is not less than 500 ppm when heated at a temperature of 140°C.

11. The scavenger for aldehyde(s) as set forth in claim 8, wherein the basic gas generated from the compounds having a property of generating the basic gas is ammonia gas and starting temperature of decomposition of the compounds having a property of generating said basic gas is not greater than 250°C.

12. The scavenger for aldehyde(s) as set forth in claim 8, wherein the compounds having a property of generating the basic gas is any one of urea, ethylene urea, ammonium sulfite or carbodihydrazide.

13. The scavenger for aldehyde(s) as set forth in claim 8, wherein the starting temperature of thermal decomposition of the compounds having a property of generating the basic gas by heating is higher by not less than 10°C than the starting temperature of the compounds for trapping aldehyde(s) having a property of generating the acidic gas.

14. The scavenger for aldehyde(s) as set forth in claim 8, wherein the weight ratio of the compounds for trapping aldehyde(s) and the compounds having a property of generating the basic gas is 5/95 to 95/5.

15. A scavenger for aldehyde(s) used by being added to or dispersed in woody materials or binders, wherein said scavenger for aldehyde(s) is powdery at a room temperature, said scavenger for aldehyde(s) includes compounds for trapping aldehyde(s) being solid at a room temperature generating acidic gas by heating and basic compounds.

16. The scavenger for aldehyde(s) as set forth in claim 15, wherein said basic compounds are the compounds selected from the group of oxides or hydroxides of calcium, aluminum, zinc, or magnesium, sodium aluminate, alkyl amines and polyamine.

17. The scavenger for aldehyde(s) as set forth in claim 15, wherein the weight ratio of said compounds for trapping aldehyde(s) and said basic compounds is 5/95 to 95/5.

18. The scavenger for aldehyde(s) as set forth in claim 1, including at least one compounds selected from the group of sodium sulfite, potassium sulfite, and hydrazides in addition to said compounds for trapping aldehyde(s).

19. A woody panel made up with the scavenger for aldehyde(s) set forth in claim 1 added to woody materials.

20. A method for manufacturing a woody panel comprising the process of:

allowing a powdery scavenger for aldehyde(s) which includes compounds for trapping aldehyde(s) being solid at a room temperature and having a property of generating acidic gas to be contained in formaldehyde-based resin binders;
adding the formaldehyde-based binders which include a scavenger for aldehyde(s) obtained by said process to woody materials; and
trapping aldehyde(s) generated from said formaldehyde-based resin binders by acidic gas generated from said compounds for trapping aldehyde(s) together with a woody panel with woody materials bound by hot pressing the woody materials with binders obtained by said process.

21. A method for manufacturing a woody panel comprising the process of:

adding formaldehyde-based resin binders to woody materials;
allowing a powdery scavenger for aldehyde(s) including compounds for trapping aldehyde(s) being solid at a room temperature and having a property of generating acidic gas to be dispersed and contained in the woody materials; and
trapping aldehyde(s) generated from said formaldehyde-based resin binders by the acidic gas generated from the compounds for trapping said aldehyde(s) together with a woody panel with said woody materials bound by hot pressing the woody materials to which binders obtained by said two processes (regardless of process order) are added.

22. A method for manufacturing a woody panel comprising the process of:

adding formaldehyde-based resin binders to woody materials;
allowing a powdery scavenger for aldehyde including compounds for trapping aldehyde(s) being solid at a room temperature and having a property of generating acidic gas to be dispersed and contained in the woody materials;
allowing the compounds having a property of generating basic gas by heating to be dispersed and contained in the woody materials;
trapping aldehyde(s) generated from said formaldehyde-based resin binders by the acidic gas generated from the compounds for trapping said aldehyde(s) together with a woody panel with said woody materials bound by hot pressing the woody materials to which binders obtained by said three processes (regardless of process order) are added; and
erasing said extra acidic gas by said basic gas after said process.

23. A method for manufacturing a woody panel comprising the process of:

adding formaldehyde-based resin binders to woody materials;
allowing a powdery scavenger for aldehyde including compounds for trapping aldehyde(s) being solid at a room temperature and having a property of generating acidic gas to be dispersed and contained in the woody materials; allowing basic compounds to be dispersed and contained in the woody materials,

the process of trapping aldehyde(s) generated from said formaldehyde-based resin binders by the acidic gas generated from the compounds for trapping said aldehyde(s) together with a woody panel with said woody materials bound by hot pressing the woody materials to which binders obtained by said three processes (regardless of process order)are added; and

erasing said extra acidic gas by said basic compounds after said process.

24. The woody panel comprising the process of:

adding a scavenger for aldehyde(s) set forth in claim 1 to woody materials to which formaldehyde-based resin binders are applied before hot press formation; and

heating for at least 60 seconds at a temperature ranging from 100 to 300°C.

25. A woody panel wherein a solution which comprises one or more compounds selected from the group of sulfite, hydrogen sulfite, urea and its derivatives, hydrazides is coated on at least one surface of a woody panel made up by adding a powdery scavenger for aldehyde(s) including compounds for trapping aldehyde(s) being solid under a room temperature having a property of generating acidic gas by heating.

26. A method for removing aldehyde(s) comprising the process of:

removing aldehyde(s) generated from said woody materials by the reaction with an acidic gas generated from said scavenger for aldehyde(s) by heating the woody materials to which formaldehyde-based resin binders and a scavenger for aldehyde(s) set forth in claim 1 are added.

27. A method for removing aldehyde(s) and acidic gas comprising the process of:

removing the acidic gas generated from said woody materials by the reaction with the acidic gas generated from said scavenger for aldehyde(s) by heating the woody materials to which formaldehyde-based resin binders and a scavenger for aldehyde(s) set forth in claim 8 are added; and

removing the extra generated acidic gas by the reaction with basic gas.

28. A method for removing aldehyde(s) and acidic gas comprising the process of:

removing the acidic gas generated from said woody materials by the reaction with the acidic gas generated from said scavenger for aldehyde(s) by heating the woody materials to which formaldehyde-based resin binders and a scavenger for aldehyde(s) set forth in claim 15 are added; and

removing the extra acidic gas generated by the reaction with basic compounds contained in said scavenger for aldehyde(s).

29. A method for manufacturing a woody panel pasted with a decorative sheet comprising the process of :

coating an adhesive on at least one surface and/or one surface of a decorative sheet of a woody panel made up by adding a powdery scavenger for aldehyde(s) which includes compounds for trapping aldehyde(s) being solid at a room temperature generating acidic gas by heating to the woody materials; and

pasting a decorative sheet at a temperature of 60 to 160°C.

30. A woody panel pasted with a decorative sheet obtained by a manufacturing method of the woody panel pasted with a decorative sheet set forth in claim 29.

31. A scavenger for aldehyde(s) used by being added to or dispersed in woody materials or binders, wherein said scavenger for aldehyde(s) is powdery at a room temperature, said scavenger for aldehyde(s) includes compounds for trapping aldehyde(s) being solid at a roomtemperature generating acidic gas by heating and water-repellent agents being solid at a room temperature.

32. The scavenger for aldehyde(s) as set forth in claim 31, wherein said water-repellent agents are waxes with a melting point of 40 to 140 °C.

33. The scavenger for aldehyde(s) as set forth in claim 31, wherein said water-repellent agents are any one of carnauba waxes, montan waxes, castor waxes, paraffin waxes, microcrystalline waxes, hydrogenated oils and fats or polyethylene waxes.

34. The scavenger for aldehyde(s) as set forth in claim 31, wherein said water-repellent agents are either of paraffin waxes or hydrogenated oils and fats.

35. The scavenger for aldehyde(s) as set forth in claim 31, wherein said water-repellent agents are contained in 5 to 80 wt % in said scavenger for aldehyde(s).

36. A set for binding woody materials used in manufacturing a woody panel by adhering woody materials, wherein said set is made up at least of formaldehyde-based resin binders, a scavenger for aldehyde(s) set forth in claim 1, and powdery water-repellent agent which includes one or more water-repellent agents being solid at a room temperature.

37. The set for binding woody materials as set forth in claim 36, wherein said water-repellent agents are waxes with a melting point of 40 to 140˚C.

38. The set for binding woody materials as set forth in claim 36, wherein said water-repellent agents are any one of carnaba waxes, montan waxes, castor waxes, paraffin waxes, microcrystalline waxes, hydrogenated oils and fats, or polyethylene waxes.

39. The set for bonding woody materials as set forth in claim 36, wherein said water-repellent agents are either of paraffin waxes or hydrogenated oils and fats.

40. The woody panel made up with at least the scavenger for aldehyde(s) set forth in claim 1 and the water-repellent agents being solid at a room temperature.

41. A method for manufacturing a woody panel comprising:

the addition process of adding formaldehyde-based binders, compounds for trapping aldehyde(s) being solid at a room temperature having a property of generating acidic gas by heating, and water-repellent agents being solid at a room temperature to woody materials; and
the hot pressing process of heating said woody materials with pressure applied, binding said woody materials thereby forming the woody panel.

42. The method for manufacturing a woody panel as set forth in claim 41, wherein the addition ratio of the water-repellent agent and the compounds for trapping aldehyde(s) added to the woody materials in the addition process is 5/95 to 80/20 (weight ratio).

43. A scavenger for aldehyde(s) being powdery at a room temperature including at least one or more compounds being solid at a room temperature having a property of generating acidic gas by heating, one or more water-repellent agents being solid at a room temperature, and one or more anti-caking agents.

44. The scavenger for aldehyde(s) as set forth in claim 43, wherein
said anti-caking agents are the compounds selected from the group of carbonate compounds, silicate compounds, and aluminosilicate compounds.

45. The scavenger for aldehyde(s) as set forth in claim 43, wherein not less than 70 wt % of particles contained in said powdery scavenger for aldehyde(s) has a particle diameter of not greater than 2 mm.

46. A method for manufacturing a scavenger for aldehyde(s) being powdery at a room temperature including one or more compounds for trapping aldehyde(s) being solid at a room temperature having a property of generating acidic gas by heating, one or more water-repellent agents being solid at a room temperature, and one or more anti-caking agents, wherein the methods comprise:

(1) the process of melting said water-repellent agents;
(2) the process of dropping or spraying said melted water-repellent agents in a state of higher than its melting point by 1 to 20˚C, while agitating and mixing said compounds for trapping aldehyde(s) after the process (1);

(3) the process of cooling the mixture obtained by said process (2), while agitating and mixing;
(4) the process of further adding anti-caking agents at the point where said mixture is cooled to the temperature lower than a melting point of said water-repellent agents by 10 to 50°C in said process (3); and
(5) the screening process of sifting the mixture obtained by said process (4), thereby obtaining powdery scavenger for aldehyde(s).

**47.** The method for manufacturing a scavenger for aldehyde(s) as set forth in claim 46, wherein agitating treatment is conducted under the condition that the Froude number Fr is not less than 0.1 and less than 5.0 defined by the following formula (i) in the agitation and mixture of said (2) and (3) processes.

$$Fr=V/[(R \times g)^{0.5}] \qquad (i)$$

(in the formula (i), V represents circumferential velocity [m/s]
at the tip end of an agitating blade, R represents a rotating radius [m] of the agitating blade, and g represents gravitational acceleration.

**48.** A woody panel obtained by adding at least formaldehyde-based binders and a scavenger for aldehyde(s) set forth in claim 43 to woody materials, followed by applying hot press formation on said woody materials.

**Amended claims under Art. 19.1 PCT**

**1.** (amended) A scavenger for aldehyde(s) used by being added to or dispersed in woody materials or binders, wherein said scavenger for aldehyde(s) is powdery at a room temperature, said scavenger for aldehyde(s) includes at least one or more compounds for trapping aldehyde(s) being solid at a room temperature, and said compounds for trapping aldehyde(s) generate acidic gas that has reactivity with aldehyde(s) by heating.

**2.** (amended) The scavenger for aldehyde(s) as set forth in claim 1, wherein among the compounds for trapping aldehyde(s), said acidic gas generated by heating is sulfurous acid gas.

**3.** (amended) The scavenger for aldehyde(s) as set forth in claim 1, wherein said acidic gas generated from said compounds for trapping aldehyde(s) is sulfurous acid gas and generation concentration of said sulfurous acid gas is not less than 500ppm when heated at a temperature of 140°C.

**4.** (amended) The scavenger for aldehyde(s) as set forth in claim1, wherein said acidic gas generated from said compounds for trapping aldehyde(s) is sulfurous acid gas and starting temperature of decomposition of said compounds for trapping aldehyde(s) is not greater than 250°C.

**5.** The scavenger for aldehyde(s) as set forth in claim 1, wherein said compounds for trapping aldehyde(s) are compounds which are any one of bisulfite, pyrosulfite, and dithionite.

**6.** The scavenger for aldehyde(s) as set forth in claim 1, wherein said compounds for trapping aldehyde(s) are any one of sodium hydrogensulfite, potassium hydrogensulfite, sodium pyrosulfite, potassium pyrosulfite, magnesium sulfite, zinc sulfite, or aluminum sulfite.

**7.** The scavenger for aldehyde(s) as set forth in claim 1, wherein said compounds for trapping aldehyde(s) are contained in 5 to 95 wt % with respect to the total amount of the scavenger for aldehyde(s).

**8.** (amended) A scavenger for aldehyde(s) used by being added to or dispersed in woody materials or binders, wherein said scavenger for aldehyde(s) is powdery at a room temperature and said scavenger for aldehyde(s) comprises compounds for trapping aldehyde(s) being solid at a room temperature generating acidic gas that has reactivity with aldehyde(s) by heating and compounds having a property of generating basic gas by heating.

**9.** The scavenger for aldehyde(s) as set forth in claim 8, wherein among the compounds having a property of generating said basic gas, generated basic gas is ammonia gas.

**10.** The scavenger for aldehyde(s) as set forth in claim 8, wherein basic gas generated from the compounds having a property of generating said basic gas is ammonia gas, and the generating concentration of said ammonia gas is not less than 500 ppm when heated at a temperature of 140˚C.

**11.** The scavenger for aldehyde(s) as set forth in claim 8, wherein the basic gas generated from the compounds having a property of generating the basic gas is ammonia gas and starting temperature of decomposition of the compounds having a property of generating said basic gas is not greater than 250˚C.

**12.** The scavenger for aldehyde(s) as set forth in claim 8, wherein the compounds having a property of generating the basic gas is any one of urea, ethylene urea, ammonium sulfite or carbodihydrazide.

**13.** The scavenger for aldehyde(s) as set forth in claim 8, wherein the starting temperature of thermal decomposition of the compounds having a property of generating the basic gas by heating is higher by not less than 10˚C than the starting temperature of the compounds for trapping aldehyde(s) having a property of generating the acidic gas.

**14.** The scavenger for aldehyde(s) as set forth in claim 8, wherein the weight ratio of the compounds for trapping aldehyde(s) and the compounds having a property of generating the basic gas is 5/95 to 95/5.

**15.** (amended) A scavenger for aldehyde(s) used by being added to or dispersed in woody materials or binders, wherein said scavenger for aldehyde(s) is powdery at a room temperature, said scavenger for aldehyde(s) includes compounds for trapping aldehyde(s) being solid at a room temperature generating acidic gas that has reactivity with aldehyde(s) by heating and basic compounds.

**16.** The scavenger for aldehyde(s) as set forth in claim 15, wherein said basic compounds are the compounds selected from the group of oxides or hydroxides of calcium, aluminum, zinc, or magnesium, sodium aluminate, alkyl amines and polyamine.

**17.** The scavenger for aldehyde(s) as set forth in claim 15, wherein the weight ratio of said compounds for trapping aldehyde(s) and said basic compounds is 5/95 to 95/5.

**18.** The scavenger for aldehyde(s) as set forth in claim 1, including at least one compounds selected from the group of sodium sulfite, potassium sulfite, and hydrazides in addition to said compounds for trapping aldehyde(s).

**19.** A woody panel made up with the scavenger for aldehyde(s) set forth in claim 1 added to woody materials.

**20.** (amended) A method for manufacturing a woody panel comprising the process of:

allowing a powdery scavenger for aldehyde(s) which includes compounds for trapping aldehyde(s) being solid at a room temperature and having a property of generating acidic gas that has reactivity with aldehyde(s) by heating to be contained in formaldehyde-based resin binders;
adding the formaldehyde-based binders which include a scavenger for aldehyde(s) obtained by said process to woody materials; and
trapping aldehyde(s) generated from said formaldehyde-based resin binders by acidic gas generated from said compounds for trapping aldehyde(s) together with a woody panel with woody materials bound by hot pressing the woody materials with binders obtained by said process.

**21.** (amended) A method for manufacturing a woody panel comprising the process of:

adding formaldehyde-based resin binders to woody materials;
allowing a powdery scavenger for aldehyde(s) including compounds for trapping aldehyde(s) being solid at a room temperature and having a property of generating acidic gas that has reactivity with aldehyde(s) by heating to be dispersed and contained in the woody materials; and
trapping aldehyde(s) generated from said formaldehyde-based resin binders by the acidic gas generated from the compounds for trapping said aldehyde(s) together with a woody panel with said woody materials bound by hot pressing the woody materials to which binders obtained by said two processes (regardless of process order) are added.

**22.** (amended) A method for manufacturing a woody panel comprising the process of:

adding formaldehyde-based resin binders to woody materials;
allowing a powdery scavenger for aldehyde including compounds for trapping aldehyde(s) being solid at a room temperature and having a property of generating acidic gas that has reactivity with aldehyde(s) by heating to be dispersed and contained in the woody materials;
allowing the compounds having a property of generating basic gas by heating to be dispersed and contained in the woody materials;
trapping aldehyde(s) generated from said formaldehyde-based resin binders by the acidic gas generated from the compounds for trapping said aldehyde(s) together with a woody panel with said woody materials bound by hot pressing the woody materials to which binders obtained by said three processes (regardless of process order) are added; and
erasing said extra acidic gas by said basic gas after said process.

**23.** (amended) A method for manufacturing a woody panel comprising the process of:

adding formaldehyde-based resin binders to woody materials;
allowing a powdery scavenger for aldehyde including compounds for trapping aldehyde(s) being solid at a room temperature and having a property of generating acidic gas that has reactivity with aldehyde(s) by heating to be dispersed and contained in the woody materials;
allowing basic compounds to be dispersed and contained in the woody materials,
the process of trapping aldehyde(s) generated from said formaldehyde-based resin binders by the acidic gas generated from the compounds for trapping said aldehyde(s) together with a woody panel with said woody materials bound by hot pressing the woody materials to which binders obtained by said three processes (regardless of process order)are added; and
erasing said extra acidic gas by said basic compounds after said process.

**24.** A method for manufacturing a woody panel comprising the process of:

adding a scavenger for aldehyde(s) set forth in claim 1 to woody materials to which formaldehyde-based resin binders are applied before hot press formation; and
heating for at least 60 seconds at a temperature ranging from 100 to 300˚C.

**25.** (amended) A woody panel wherein a solution which comprises one or more compounds selected from the group of sulfite, hydrogen sulfite, urea and its derivatives, hydrazides is coated on at least one surface of a woody panel made up by adding a powdery scavenger for aldehyde(s) including compounds for trapping aldehyde(s) being solid under a room temperature having a property of generating acidic gas that has reactivity with aldehyde(s) by heating.

**26.** (amended) A method for removing aldehyde(s) comprising the process of:

removing aldehyde(s) generated from said woody materials by the reaction with said acidic gas generated from said scavenger for aldehyde(s) by heating the woody materials to which formaldehyde-based resin binders and a scavenger for aldehyde(s) set forth in claim 1 are added.

**27.** (amended) A method for removing aldehyde(s) and acidic gas comprising the process of:

removing the acidic gas generated from said woody materials by the reaction with said acidic gas generated from said scavenger for aldehyde(s) by heating the woody materials to which formaldehyde-based resin binders and a scavenger for aldehyde(s) set forth in claim 8 are added; and
removing said extra generated acidic gas by the reaction with basic gas.

**28.** (amended) A method for removing aldehyde(s) and acidic gas comprising the process of:

removing the acidic gas generated from said woody materials by the reaction with said acidic gas generated from said scavenger for aldehyde(s) by heating the woody materials to which formaldehyde-based resin binders and a scavenger for aldehyde(s) set forth in claim 15 are added; and
removing said extra acidic gas generated by the reaction with basic compounds contained in said scavenger for aldehyde(s).

**29.** (amended) A method for manufacturing a woody panel pasted with a decorative sheet comprising the process of :

coating an adhesive on at least one surface and/or one surface of a decorative sheet of a woody panel made up by adding a powdery scavenger for aldehyde(s) which includes compounds for trapping aldehyde(s) being solid at a room temperature generating acidic gas that has reactivity with aldehyde(s) by heating to the woody materials; and

pasting a decorative sheet at a temperature of 60 to 160˚C.

**30.** A woody panel pasted with a decorative sheet obtained by a manufacturing method of the woody panel pasted with a decorative sheet set forth in claim 29.

**31.** (amended) A scavenger for aldehyde(s) used by being added to or dispersed in woody materials or binders, wherein said scavenger for aldehyde(s) is powdery at a room temperature, said scavenger for aldehyde(s) includes compounds for trapping aldehyde(s) being solid at a room temperature generating acidic gas that has reactivity with aldehyde(s) by heating and water-repellent agents being solid at a room temperature.

**32.** The scavenger for aldehyde(s) as set forth in claim 31, wherein said water-repellent agents are waxes with a melting point of 40 to 140 ˚C.

**33.** The scavenger for aldehyde(s) as set forth in claim 31, wherein said water-repellent agents are any one of carnauba waxes, montan waxes, castor waxes, paraffin waxes, microcrystalline waxes, hydrogenated oils and fats or polyethylene waxes.

**34.** The scavenger for aldehyde(s) as set forth in claim 31, wherein said water-repellent agents are either of paraffin waxes or hydrogenated oils and fats.

**35.** The scavenger for aldehyde(s) as set forth in claim 31, wherein said water-repellent agents are contained in 5 to 80 wt % in said scavenger for aldehyde(s).

**36.** A set for binding woody materials used in manufacturing a woody panel by adhering woody materials, wherein said set is made up at least of formaldehyde-based resin binders, a scavenger for aldehyde(s) set forth in claim 1, and powdery water-repellent agent which includes one or more water-repellent agents being solid at a room temperature.

**37.** The set for binding woody materials as set forth in claim 36, wherein said water-repellent agents are waxes with a melting point of 40 to 140˚C.

**38.** The set for binding woody materials as set forth in claim 36, wherein said water-repellent agents are any one of carnaba waxes, montan waxes, castor waxes, paraffin waxes, microcrystalline waxes, hydrogenated oils and fats, or polyethylene waxes.

**39.** The set for bonding woody materials as set forth in claim 36, wherein said water-repellent agents are either of paraffin waxes or hydrogenated oils and fats.

**40.** The woody panel made up with at least the scavenger for aldehyde(s) set forth in claim 1 and the water-repellent agents being solid at a room temperature.

**41.** (amended) A method for manufacturing a woody panel comprising:

the addition process of adding formaldehyde-based binders, compounds for trapping aldehyde(s) being solid at a room temperature having a property of generating acidic gas that has reactivity with aldehyde(s) by heating, and water-repellent agents being solid at a room temperature to woody materials; and
the hot pressing process of heating said woody materials with pressure applied, binding said woody materials thereby forming the woody panel.

**42.** The method for manufacturing a woody panel as set forth in claim 41, wherein the addition ratio of the water-repellent agent and the compounds for trapping aldehyde(s) added to the woody materials in the addition process is 5/95 to 80/20 (weight ratio).

**43.** (amended) A scavenger for aldehyde(s) being powdery at a room temperature including at least one or more compounds being solid at a room temperature having a property of generating acidic gas that has reactivity with aldehyde(s) by heating, one or more water-repellent agents being solid at a room temperature, and one or more anti-caking agents.

**44.** The scavenger for aldehyde(s) as set forth in claim 43, wherein
said anti-caking agents are the compounds selected from the group of carbonate compounds, silicate compounds, and aluminosilicate compounds.

**45.** The scavenger for aldehyde(s) as set forth in claim 43, wherein not less than 70 wt % of particles contained in said powdery scavenger for aldehyde(s) has a particle diameter of not greater than 2 mm.

**46.** (amended) A method for manufacturing a scavenger for aldehyde(s) being powdery at a room temperature including one or more compounds for trapping aldehyde(s) being solid at a room temperature having a property of generating acidic gas that has reactivity with aldehyde(s) by heating, one or more water-repellent agents being solid at a room temperature, and one or more anti-caking agents, wherein the methods comprise:

(1) the process of melting said water-repellent agents;
(2) the process of dropping or spraying said melted water-repellent agents in a state of higher than its melting point by 1 to 20˚C, while agitating and mixing said compounds for trapping aldehyde(s) after the process (1);
(3) the process of cooling the mixture obtained by said process (2), while agitating and mixing;
(4) the process of further adding anti-caking agents at the point where said mixture is cooled to the temperature lower than a melting point of said water-repellent agents by 10 to 50˚C in said process (3); and
(5) the screening process of sifting the mixture obtained by said process (4), thereby obtaining powdery scavenger for aldehyde(s).

**47.** The method for manufacturing a scavenger for aldehyde(s) as set forth in claim 46, wherein agitating treatment is conducted under the condition that the Froude number Fr is not less than 0.1 and less than 5.0 defined by the following formula (i) in the agitation and mixture of said (2) and (3) processes.

$$Fr=V/[(R \times g)^{0.5}] \qquad (i)$$

(in the formula (i), V represents circumferential velocity [m/s]
at the tip end of an agitating blade, R represents a rotating radius [m] of the agitating blade, and g represents gravitational acceleration.

**48.** A woody panel obtained by adding at least formaldehyde-based binders and a scavenger for aldehyde(s) set forth in claim 43 to woody materials, followed by applying hot press formation on said woody materials.

【FIG.1】

**INTERNATIONAL SEARCH REPORT**

| International application No. |
| --- |
| PCT/JP2006/312985 |

A. CLASSIFICATION OF SUBJECT MATTER
*C09K3/00*(2006.01)i, *B27K5/00*(2006.01)i, *C09J161/00*(2006.01)i, *C09J191/06* (2006.01)i, *A62D3/00*(2006.01)n

According to International Patent Classification (IPC) or to both national classification and IPC

B. FIELDS SEARCHED

Minimum documentation searched (classification system followed by classification symbols)
C09K3/00, B27K5/00, C09J161/00, C09J191/06

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>A | JP 5-287253 A  (Mitsui Toatsu Chemicals, Inc.),<br>02 November, 1993 (02.11.93),<br>Claim 1; Par. Nos. [0001], [0007] to [0008],<br>[0011] to [0015]<br>(Family: none) | 1,7-11,<br>14-15,17,<br>19-20,24,<br>26-30<br>2-6,12-13,<br>16,18,21-23,<br>25,31-48 |
| A | JP 10-119010 A  (Mitsui Toatsu Chemicals, Inc.),<br>12 May, 1998 (12.05.98),<br>(Family: none) | 1-48 |
| A | JP 2005-111701 A  (Daiken Trade & Industry<br>Co., Ltd.),<br>28 April, 2005 (28.04.05),<br>(Family: none) | 1-48 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 September, 2006 (26.09.06) | Date of mailing of the international search report<br>03 October, 2006 (03.10.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 900 788 A1**

| | INTERNATIONAL SEARCH REPORT | International application No. |
| | | PCT/JP2006/312985 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-306436 A  (Ipposha Oil Industries Co., Ltd.), 04 November, 2004 (04.11.04), (Family: none) | 1-48 |
| A | JP 49-66804 A  (Matsushita Electric Works, Ltd.), 28 June, 1974 (28.06.74), (Family: none) | 1-48 |
| A | JP 48-48532 A  (Honen Seiyu Kabushiki Kaisha), 10 July, 1973 (10.07.73), (Family: none) | 1-48 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11240002 A
- JP 2002331504 A

- JP 10119010 A